(19) Europäisches Patentamt / European Patent Office / Office européen des brevets

(11) **EP 3 188 548 A1**

(12) **EUROPEAN PATENT APPLICATION**
published in accordance with Art. 153(4) EPC

(43) Date of publication:
05.07.2017 Bulletin 2017/27

(51) Int Cl.:
*H04W 48/16* (2009.01)   *H04W 76/02* (2009.01)
*H04W 72/04* (2009.01)

(21) Application number: 14902509.0

(22) Date of filing: 23.09.2014

(86) International application number:
PCT/CN2014/087171

(87) International publication number:
WO 2016/044991 (31.03.2016 Gazette 2016/13)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: HUAWEI TECHNOLOGIES CO., LTD.
Shenzhen Guangdong 518129 (CN)

(72) Inventors:
• ZHANG, Jian
  Shenzhen
  Guangdong 518129 (CN)

• ZENG, Qinghai
  Shenzhen
  Guangdong 518129 (CN)
• LIANG, Yongming
  Shenzhen
  Guangdong 518129 (CN)

(74) Representative: Maiwald Patentanwalts GmbH
Engineering
Elisenhof
Elisenstrasse 3
80335 München (DE)

(54) **TERMINAL, BASE STATION, BASE STATION CONTROLLER AND MILLIMETRE WAVE HONEYCOMB COMMUNICATION METHOD**

(57)    The present invention discloses a terminal, a base station, a base station controller, and a millimeter-wave cellular communication method, and pertains to the field of wireless communications technologies. The terminal includes a bus, and a processor, a memory, a transmitter, and a receiver that are connected to the bus. The processor is configured to: control the receiver to obtain at least one piece of beam index information corresponding to at least one millimeter-wave band, and communicate, by using a beam corresponding to the at least one piece of beam index information, a millimeter-wave base station corresponding to the at least one millimeter-wave band. The present invention resolves a problem in the prior art that available bandwidth is relatively small when a terminal performs cellular communication, so as to extend a frequency range of terminal communication, increase a data transmission rate of the terminal, reduce signal fading and distortion during millimeter-wave communication between the terminal and a millimeter-wave base station, and reduce interference between users on a same channel.

FIG. 1

## Description

## TECHNICAL FIELD

The present invention relates to the field of wireless communications technologies, and in particular, to a terminal, a base station, a base station controller, and a millimeter-wave cellular communication method.

## BACKGROUND

With rapid development of packet services and intelligent terminals, to provide a user with better network experience, a growing quantity of services with a large data volume are emerging. Correspondingly, these services with a large data volume impose increasing requirements on a transmission rate and a spectrum of a radio network.

A Long Term Evolution Advanced (English: Long Term Evolution-Advanced, LTE-A for short) technology is further evolution of an LTE Long Term Evolution (English: Long Term Evolution, LTE for short) technology. A downlink peak rate and an uplink peak rate provided by LTE-A can respectively reach 1 Gbps and 500 Mbps. However, in the prior art, maximum bandwidth supported by LTE-A is only 100 MHz, and an available spectrum range is limited. Therefore, requirements of a future service on a capacity and a peak data rate are difficult to be met.

## SUMMARY

To resolve a problem in the prior art that requirements of a future service on a capacity and a peak data rate are difficult to be met because maximum bandwidth supported by LTE-A is only 100 MHz and an available frequency spectrum range is limited, embodiments of the present invention provide a terminal, a base station, a base station controller, and a millimeter-wave cellular communication method. The technical solutions are as follows:

According to a first aspect, a terminal is provided, where the terminal includes a bus, and a processor, a memory, a transmitter, and a receiver that are connected to the bus, where the memory is configured to store several instructions, and the several instructions are configured to be executed by the processor; and the processor is configured to:

control the receiver to obtain beam index information corresponding to a millimeter-wave band; and communicate, by using a beam corresponding to the beam index information, with a millimeter-wave base station corresponding to the millimeter-wave band.

In a first possible implementation manner of the first aspect,
the processor is further configured to control the receiver to receive a radio resource reconfiguration message or a broadcast message sent by a master base station or the millimeter-wave base station, and to obtain the beam index information included in the radio resource reconfiguration message or the broadcast message; or
the processor is further configured to negotiate with a master base station or the millimeter-wave base station to agree on the beam index information; where
the master base station and the millimeter-wave base station are a same base station or different base stations.

With reference to the first possible implementation manner of the first aspect, in a second possible implementation manner of the first aspect,
the processor is further configured to select beams corresponding to some or all beam index information in the beam index information, to communicate with the millimeter-wave base station; or
the processor is further configured to: determine first beam index information that is in the beam index information and is specified by the master base station or the millimeter-wave base station, and communicate with the millimeter-wave base station according to a beam corresponding to the first beam index information.

With reference to the first aspect, or the first or the second possible implementation manner of the first aspect, in a third possible implementation manner of the first aspect, each piece of the beam index information is corresponding to information about one precoding codebook or information about one group of antenna weights, or each of the beam index is corresponding to information about multiple precoding codebooks or information about multiple groups of antenna weights, and each precoding codebook or information about each group of antenna weights uniquely determines a beam.

With reference to the first aspect, or the first or the second possible implementation manner of the first aspect, in a fourth possible implementation manner of the first aspect, each piece of the beam index information is corresponding to a coverage area of one sector or one cell, or each piece of the beam index information is corresponding to a part of a coverage area of one sector or one cell;
the beam index information is one-level index information or N-level index information, N is an integer, and $N{\geq}2$; and when the beam index information is the N-level index information, the $i^{th}$ level index information in the beam index information is associated with the $(i+1)^{th}$ level index information, where a coverage area of a beam corresponding to the $(i+1)^{th}$ level index information is not greater than a coverage area of a beam corresponding to the $i^{th}$ level index information, i is an integer, and $2{\leq}i{\leq}N$.

With reference to the first aspect or the first possible implementation manner of the first aspect, in a fifth possible implementation manner of the first aspect, the beam index information includes second beam index information used for radio resource management RRM measurement; and
the processor is further configured to:

perform RRM measurement according to a beam corresponding to the second beam index information, to obtain a first measurement result, where the first measurement result includes reference signal received power RSRP and/or reference signal received quality RSRQ; and

control the transmitter to send a first measurement report to the master base station or the millimeter-wave base station according to the first measurement result, where the first measurement report includes at least one of the following information: beam index information with highest RSRP and/or highest RSRQ, an RSRP measurement result and/or an RSRQ measurement result on a beam corresponding to the beam index information with highest RSRP and/or highest RSRQ, frequency information in which the beam index information with highest RSRP and/or highest RSRQ is located, serving cell information associated with the beam index information with highest RSRP and/or highest RSRQ, or neighboring cell information associated with the beam index information with highest RSRP and/or highest RSRQ; where

the serving cell information or the neighboring cell information is indicated by using a physical cell identifier PCI and/or a cell global identification CGI.

With reference to the fifth possible implementation manner of the first aspect, in a sixth possible implementation manner of the first aspect, the beam index information further includes third beam index information used for candidate RRM measurement; and

the processor is further configured to: when the RSRP included in the first measurement result is less than a preconfigured threshold and/or when the RSRQ included in the first measurement result is less than a preconfigured threshold, control the transmitter and the receiver to start to perform RRM measurement according to a beam corresponding to the third beam index information.

With reference to the fifth possible implementation manner of the first aspect, in a seventh possible implementation manner of the first aspect, the beam index information further includes fourth beam index information used for intra-frequency measurement; and

the processor is further configured to:

control the receiver to obtain measurement gap period information associated with the fourth beam index information; and

perform, in a measurement gap indicated by the measurement gap period information, intra-frequency measurement on the millimeter-wave band according to a beam corresponding to the fourth beam index information.

With reference to the fifth possible implementation manner of the first aspect, in an eighth possible implementation manner of the first aspect,

the processor is further configured to control the transmitter and the receiver to communicate with the millimeter-wave base station on the beam corresponding to the beam index information with highest RSRP and/or highest RSRQ.

With reference to the first aspect or the first possible implementation manner of the first aspect, in a ninth possible implementation manner of the first aspect, the processor is further configured to:

determine, from the beam index information, fifth beam index information used as a physical random access channel resource; and

perform random access according to a beam corresponding to the fifth beam index information.

With reference to the ninth possible implementation manner of the first aspect, in a tenth possible implementation manner of the first aspect,

the processor is further configured to select a piece of beam index information from the beam index information as the fifth beam index information; or

the processor is further configured to determine, as the fifth beam index information, beam index information that is in the beam index information and that is specified by the master base station or the millimeter-wave base station as the physical random access channel resource.

With reference to the ninth possible implementation manner of the first aspect, in an eleventh possible implementation manner of the first aspect,

the processor is further configured to:

control the transmitter to send a random access preamble on the beam corresponding to the fifth beam index information; and

control the receiver to receive a random access response message on the beam corresponding to the fifth beam index information, or to receive a random access response message on the beam corresponding to the beam index information.

With reference to the tenth possible implementation manner of the first aspect, in a twelfth possible implementation manner of the first aspect, the random access response message includes sixth beam index information; and

the processor is further configured to:

control the transmitter to send a random access message on a beam corresponding to the sixth beam index information, where the random access message includes an identifier of the terminal; and

control the receiver to receive a contention resolution message on the beam corresponding to the sixth beam index, or to receive a contention resolution message on the beam corresponding to the beam index information, where the contention resolution message includes the identifier of the terminal; and

the identifier of the terminal is a cell radio network temporary identifier C-RNTI or a System Architecture Evolution-temporary mobile station identifier S-TMSI of the terminal.

In a thirteenth possible implementation manner of the first aspect,
the processor is further configured to:

control the receiver to receive sounding reference signal configuration information that is of a cell on the millimeter-wave band and is sent by the master base station or the millimeter-wave base station; and control the transmitter to send, according to the sounding reference signal configuration information, a sounding reference signal on the beam corresponding to the beam index information.

According to a second aspect, a terminal is provided, where the terminal includes:

a receiving module, configured to obtain beam index information corresponding to a millimeter-wave band; and
a communications module, configured to communicate, by using a beam corresponding to the beam index information, with a millimeter-wave base station corresponding to the millimeter-wave band.

In a first possible implementation manner of the second aspect,
the receiving module is further configured to:

receive a radio resource reconfiguration message or a broadcast message sent by a master base station or the millimeter-wave base station; and
obtain the beam index information included in the radio resource reconfiguration message or the broadcast message; and
the communications module is further configured to negotiate with the master base station or the millimeter-wave base station to agree on the beam index information; where
the master base station and the millimeter-wave base station are a same base station or different base stations.

With reference to the first possible implementation manner of the second aspect, in a second possible implementation manner of the second aspect,
the communications module is further configured to:

select beams corresponding to some or all beam index information in the beam index information, to communicate with the millimeter-wave base station; or
determine first beam index information that is in the beam index information and is specified by the master base station or the millimeter-wave base station, and communicate with the millimeter-wave base station according to a beam corresponding to the first beam index information.

With reference to the second aspect, or the first or the second possible implementation manner of the second aspect, in a third possible implementation manner of the second aspect, each piece of the beam index information is corresponding to information about one precoding codebook or information about one group of antenna weights, or each of the beam index is corresponding to information about multiple precoding codebooks or information about multiple groups of antenna weights, and each precoding codebook or information about each group of antenna weights uniquely determines a beam.

With reference to the second aspect, or the first or the second possible implementation manner of the second aspect, in a fourth possible implementation manner of the second aspect, each piece of the beam index information is corresponding to a coverage area of one sector or one cell, or each piece of the beam index information is corresponding to a part of a coverage area of one sector or one cell;
the beam index information is one-level index information or N-level index information, N is an integer, and N≥2; and when the beam index information is the N-level index information, the i$^{th}$ level index information in the beam index information is associated with the (i+1)$^{th}$ level index information, where a coverage area of a beam corresponding to the (i+1)$^{th}$ level index information is not greater than a coverage area of a beam corresponding to the i$^{th}$ level index information, i is an integer, and 2≤i≤N.

With reference to the second aspect or the first possible implementation manner of the second aspect, in a fifth possible implementation manner of the second aspect, the beam index information includes second beam index information used for radio resource management RRM measurement, and the terminal further includes:

a measurement module, configured to perform RRM measurement according to a beam corresponding to the second beam index information, to obtain a first measurement result, where the first measurement result includes reference signal received power RSRP and/or reference signal received quality RSRQ; and
a sending module, configured to send a first measurement report to the master base station or the millimeter-wave base station according to the first measurement result, where the first measurement report includes at least one of the following information: beam index information with highest RSRP and/or highest RSRQ, an RSRP measurement result and/or an RSRQ measurement result on a beam corresponding to the beam index information with highest RSRP and/or highest RSRQ, frequency information in which the beam index information with highest RSRP and/or highest RSRQ is located, serving cell information associated with the beam index information with highest RSRP and/or highest RSRQ, or neighboring cell information associated with the beam index information with highest RSRP and/or highest RSRQ; where
the serving cell information or the neighboring cell information is indicated by using a physical cell identifier PCI and/or a cell global identification CGI.

With reference to the fifth possible implementation manner of the second aspect, in a sixth possible implementation manner of the second aspect, the beam index information further includes third beam index information used for candidate RRM measurement, and the measurement module is further configured to:

when the RSRP included in the first measurement result is less than a preconfigured threshold and/or when the RSRQ included in the first measurement result is less than a preconfigured threshold, start to perform RRM measurement according to a beam corresponding to the third beam index information.

With reference to the fifth possible implementation manner of the second aspect, in a seventh possible implementation manner of the second aspect, the beam index information further includes fourth beam index information used for intra-frequency measurement;
the receiving module is further configured to obtain measurement gap period information associated with the fourth beam index information; and
the measurement module is further configured to perform, in a measurement gap indicated by the measurement gap period information, intra-frequency measurement on the millimeter-wave band according to a beam corresponding to the fourth beam index information.
With reference to the fifth possible implementation manner of the second aspect, in an eighth possible implementation manner of the second aspect, the communications module is further configured to communicate, by the terminal, with the millimeter-wave base station on the beam corresponding to the beam index information with highest RSRP and/or highest RSRQ.
With reference to the second aspect or the first possible implementation manner of the second aspect, in a ninth possible implementation manner of the second aspect, the terminal further includes:

a determining module, configured to determine, from the beam index information, fifth beam index information used as a physical random access channel resource; and
an access module, configured to perform random access according to a beam corresponding to the fifth beam index information.

With reference to the ninth possible implementation manner of the second aspect, in a tenth possible implementation manner of the second aspect, the determining module is specifically configured to:

select a piece of beam index information from the beam index information as the fifth beam index information; or
determine, as the fifth beam index information, beam index information that is in the beam index information and that is specified by the master base station or the millimeter-wave base station as the physical random access channel resource.

With reference to the ninth possible implementation manner of the second aspect, in an eleventh possible implementation manner of the second aspect,
the sending module is further configured to send a random access preamble on the beam corresponding to the fifth beam index information; and
the receiving module is further configured to:

receive a random access response message on the beam corresponding to the fifth beam index information; or
receive a random access response message on the beam corresponding to the beam index information.

With reference to the tenth possible implementation manner of the second aspect, in a twelfth possible implementation manner of the second aspect, the random access response message includes sixth beam guide information;
the sending module is further configured to send a random access message on a beam corresponding to the sixth beam index information, where the random access message includes an identifier of the terminal; and
the receiving module is further configured to:

receive a contention resolution message on the beam corresponding to the sixth beam index; or
receive a contention resolution message on the beam corresponding to the beam index information, where the contention resolution message includes the identifier of the terminal; and
the identifier of the terminal is a cell radio network temporary identifier C-RNTI or a System Architecture Evolution-temporary mobile station identifier S-TMSI of the terminal.

In a thirteenth possible implementation manner of the second aspect,
the receiving module is further configured to receive sounding reference signal configuration information that is of a cell on the millimeter-wave band and is sent by the master base station or the millimeter-wave base station; and
the sending module is further configured to send, according to the sounding reference signal configuration information, a sounding reference signal on the beam corresponding to the beam index information.

According to a third aspect, a base station is provided, where the base station includes a bus, and a processor, a memory, a transmitter, and a receiver that are connected to the bus, where the memory is configured to store several instructions, and the several instructions are configured to be executed by the processor; and the processor is configured to configure, for a terminal, beam index information corresponding to a millimeter-wave band, where the beam index information is used to instruct the terminal to communicate, by using a beam corresponding to the beam index information, with a millimeter-wave base station corresponding to the millimeter-wave band.

In a first possible implementation manner of the third aspect,
the processor is further configured to control the transmitter to send a radio resource reconfiguration message or a broadcast message that includes the beam index information to the terminal; or
the processor is further configured to negotiate with the terminal to determine the beam index information.

With reference to the third aspect or the first possible implementation manner of the third aspect, in a second possible implementation manner of the third aspect,
the processor is further configured to:

control the receiver to receive a measurement report sent by the terminal, where the measurement report is a report that is sent by the terminal according to a measurement result of RRM measurement after the terminal performs the RRM measurement according to a beam corresponding to first beam index information included in the beam index information; and determine, according to the measurement report, the millimeter-wave base station for sending data to the terminal and beam index information used for sending data to the terminal.

With reference to the third aspect or the first possible implementation manner of the third aspect, in a third possible implementation manner of the third aspect, the processor is further configured to control the transmitter to send, to the terminal, sounding reference signal configuration information of a cell on the millimeter-wave band, where the sounding reference signal configuration information is used to instruct the terminal to send a sounding reference signal on the beam corresponding to the beam index information.

With reference to the third aspect or the first possible implementation manner of the third aspect, in a fourth possible implementation manner of the third aspect,
the processor is further configured to control the transmitter to send uplink measurement configuration information to the millimeter-wave base station, where the uplink measurement configuration information includes second beam index information, and the uplink measurement configuration information is used to instruct the millimeter-wave base station to measure, on a beam corresponding to the second beam index information, power of a sounding reference signal sent by the terminal.

According to a fourth aspect, a base station is provided, where the base station includes:

a configuration module, configured to configure, for a terminal, beam index information corresponding to a millimeter-wave band, where the beam index information is used to instruct the terminal to communicate, by using a beam corresponding to the beam index information, with a millimeter-wave base station corresponding to the millimeter-wave band.

In a first possible implementation manner of the fourth aspect, the base station further includes:

a sending module, configured to send a radio resource reconfiguration message or a broadcast message that includes the beam index information to the terminal; or
the base station further includes a negotiation module, configured to negotiate with the terminal to determine the beam index information.

With reference to the fourth aspect or the first possible implementation manner of the fourth aspect, in a second possible implementation manner of the fourth aspect, the base station further includes:

a receiving module, configured to receive a measurement report sent by the terminal, where the measurement report is a report that is sent by the terminal according to a measurement result of RRM measurement after the terminal performs the RRM measurement according to a beam corresponding to first beam index information included in the beam index information; and
a determining module, configured to determine, according to the measurement report, the millimeter-wave base station for sending data to the terminal and beam index information used for sending data to the terminal.

With reference to the fourth aspect or the first possible implementation manner of the fourth aspect, in a third possible implementation manner of the fourth aspect,
the sending module is further configured to send, to the terminal, sounding reference signal configuration information of a cell on the millimeter-wave band, where the sounding reference signal configuration information is used to instruct the terminal to send a sounding reference signal on the beam corresponding to the beam index information.

With reference to the fourth aspect or the first possible implementation manner of the fourth aspect, in a fourth possible implementation manner of the fourth aspect,

the sending module is further configured to send uplink measurement configuration information to the millimeter-wave base station, where the uplink measurement configuration information includes second beam index information, and the uplink measurement configuration information is used to instruct the millimeter-wave base station to measure, on a beam corresponding to the second beam index information, power of a sounding reference signal sent by the terminal.

According to a fifth aspect, a base station is provided, where the base station includes a bus, and a processor, a memory, a transmitter, and a receiver that are connected to the bus, where the memory is configured to store several instructions, and the several instructions are configured to be executed by the processor; and the processor is configured to configure, for a terminal, beam index information corresponding to a millimeter-wave band, where the beam index information is used to instruct the terminal to communicate, by using a beam corresponding to the beam index information, with a millimeter-wave base station corresponding to the millimeter-wave band.

In a first possible implementation manner of the fifth aspect, the processor is further configured to control the transmitter to send a radio resource reconfiguration message or a broadcast message that includes the beam index information to the terminal; or the processor is further configured to negotiate with the terminal to determine the beam index information.

With reference to the fifth aspect or the first possible implementation manner of the fifth aspect, in a second possible implementation manner of the fifth aspect, the processor is further configured to:

> control the receiver to receive a measurement report sent by the terminal, where the measurement report is a measurement report that is sent by the terminal according to a measurement result of RRM measurement after the terminal performs the RRM measurement according to a beam corresponding to first beam index information included in the beam index information; and control the transmitter to send the measurement report to a base station controller, where the measurement report is used to instruct the base station controller to determine the millimeter-wave base station for sending data to the terminal and beam index information used for sending data to the terminal.

With reference to the fifth aspect or the first possible implementation manner of the fifth aspect, in a third possible implementation manner of the fifth aspect, the processor is further configured to control the transmitter to send, to the terminal, sounding reference signal configuration information of a cell on the millimeter-wave band, where the sounding reference signal configuration information is used to instruct the terminal to send a sounding reference signal on the beam corresponding to the beam index information.

In a fourth possible implementation manner of the fifth aspect,

the processor is further configured to:

> control the receiver to receive a random access preamble that is sent by the terminal on a beam corresponding to second beam index information used as a physical random access channel resource; and control the transmitter to send a random access response message on the beam corresponding to the second beam index information.

With reference to the fourth possible implementation manner of the fifth aspect,

the random access response message includes third beam guide information; and

the processor is further configured to:

> control the receiver to receive a random access message on a beam corresponding to the third beam index information, where the random access message includes an identifier of the terminal; and control the transmitter to send a contention resolution message on the beam corresponding to the third beam index, where the contention resolution message includes the identifier of the terminal; and the identifier of the terminal is a cell radio network temporary identifier C-RNTI or a System Architecture Evolution-temporary mobile station identifier S-TMSI of the terminal.

With reference to any one of the fifth aspect, or the first to fifth possible implementation manners of the fifth aspect, in a sixth possible implementation manner of the fifth aspect,

the processor is further configured to:

> control the receiver to receive uplink measurement configuration information sent by a master base station or the base station controller, where the uplink measurement configuration information includes fourth beam index information; measure, on a beam corresponding to the fourth beam index information, power of the sounding reference signal sent by the terminal; and control the transmitter to send, to the base station controller, a measurement result that includes the power that is of the sounding reference signal and that is obtained by means of measurement, where the measurement result is used to instruct the base station controller to, when the power of the sounding reference signal is greater than a preset power threshold, instruct the millimeter-wave base station to prepare to communicate with the terminal.

According to a sixth aspect, a base station is provided, where the base station includes:

a configuration module, configured to configure, for a terminal, beam index information corresponding to a millimeter-wave band, where the beam index information is used to instruct the terminal to communicate, by using a beam corresponding to the beam index information, with a millimeter-wave base station corresponding to the millimeter-wave band.

In a first possible implementation manner of the sixth aspect,
the base station further includes a sending module, configured to send a radio resource reconfiguration message or a broadcast message that includes the beam index information to the terminal; or
the base station further includes a negotiation module, configured to negotiate with the terminal to determine the beam index information.

With reference to the sixth aspect or the first possible implementation manner of the sixth aspect, in a second possible implementation manner of the sixth aspect, the base station further includes:

a receiving module, configured to receive a measurement report sent by the terminal, where the measurement report is a measurement report that is sent by the terminal according to a measurement result of RRM measurement after the terminal performs the RRM measurement according to a beam corresponding to first beam index information included in the beam index information; where
the sending module is further configured to send the measurement report to a base station controller, where the measurement report is used to instruct the base station controller to determine the millimeter-wave base station for sending data to the terminal and beam index information used for sending data to the terminal.

With reference to the sixth aspect or the first possible implementation manner of the sixth aspect, in a third possible implementation manner of the sixth aspect,
the sending module is further configured to send, to the terminal, sounding reference signal configuration information of a cell on the millimeter-wave band, where the sounding reference signal configuration information is used to instruct the terminal to send a sounding reference signal on the beam corresponding to the beam index information.

In a fourth possible implementation manner of the sixth aspect,
the receiving module is further configured to receive a random access preamble that is sent by the terminal on a beam corresponding to second beam index information used as a physical random access channel resource; and the sending module is further configured to send a random access response message on the beam corresponding to the second beam index information.

With reference to the fourth possible implementation manner of the sixth aspect, in a fifth possible implementation manner of the sixth aspect, the random access response message includes third beam guide information;
the receiving module is further configured to receive a random access message on a beam corresponding to the third beam index information, where the random access message includes an identifier of the terminal; and the sending module is further configured to send a contention resolution message on the beam corresponding to the third beam index, where the contention resolution message includes the identifier of the terminal; and
the identifier of the terminal is a cell radio network temporary identifier C-RNTI or a System Architecture Evolution-temporary mobile station identifier S-TMSI of the terminal.

With reference to any one of the sixth aspect, or the first to fifth possible implementation manners of the sixth aspect, in a sixth possible implementation manner of the sixth aspect,
the receiving module is further configured to receive uplink measurement configuration information sent by a master base station or the base station controller, where the uplink measurement configuration information includes fourth beam index information;
the base station further includes a measurement module, configured to measure, on a beam corresponding to the fourth beam index information, power of the sounding reference signal sent by the terminal; and
the sending module is further configured to send a measurement result that includes the power that is of the sounding reference signal and that is obtained by means of measurement, where the measurement result is used to instruct the base station controller to, when the power of the sounding reference signal is greater than a preset power threshold, instruct the millimeter-wave base station to prepare to communicate with the terminal.

According to a seventh aspect, a base station controller is provided, where the base station controller includes a bus, and a processor, a memory, a transmitter, and a receiver that are connected to the bus, where the memory is configured to store several instructions, and the several instructions are configured to be executed by the processor; and
the processor is configured to:

control the transmitter to send uplink measurement configuration information to a millimeter-wave base station, where the uplink measurement configuration information includes beam index information, and the uplink measurement configuration information is used to instruct the millimeter-wave base station to measure, on a beam corresponding to the beam index information, power of a sounding reference signal sent by the terminal;

control the receiver to receive a measurement result that is sent by the millimeter-wave base station and that includes the power that is of the sounding reference signal and that is obtained by means of measurement; and

when the power of the sounding reference signal is greater than a preset power threshold, instruct the millimeter-wave base station to prepare to communicate with the terminal; where

the terminal communicates, by using the beam index information corresponding to a millimeter-wave band, millimeter-wave base stations corresponding to the millimeter-wave band.

In a first possible implementation manner of the seventh aspect, the processor is further configured to:

control the receiver to receive a measurement report sent by the millimeter-wave base station, where the measurement report is a measurement report that is sent by the terminal according to a measurement result of RRM measurement after the terminal performs the RRM measurement according to a beam corresponding to first beam index information included in the beam index information; and

determine, according to the measurement report, the millimeter-wave base station for sending data to the terminal and beam index information used for sending data to the terminal.

According to an eighth aspect, a base station controller is provided, where the base station controller includes:

a sending module, configured to send uplink measurement configuration information to a millimeter-wave base station, where the uplink measurement configuration information includes beam index information, and the uplink measurement configuration information is used to instruct the millimeter-wave base station to measure, on a beam corresponding to the beam index information, power of a sounding reference signal sent by the terminal;

a receiving module, configured to receive a measurement result that is sent by the millimeter-wave base station and that includes the power that is of the sounding reference signal and that is obtained by means of measurement; and

an instruction module, configured to: when the power of the sounding reference signal is greater than a preset power threshold, instruct the millimeter-wave base station to prepare to communicate with the terminal; where

the terminal communicates, by using the beam index information corresponding to a millimeter-wave band, millimeter-wave base stations corresponding to the millimeter-wave band.

In a first possible implementation manner of the eighth aspect,

the receiving module is further configured to receive a measurement report sent by the millimeter-wave base station, where the measurement report is a measurement report that is sent by the terminal according to a measurement result of RRM measurement after the terminal performs the RRM measurement according to a beam corresponding to first beam index information included in the beam index information; and

the apparatus further includes a determining module, configured to determine, according to the measurement report, the millimeter-wave base station for sending data to the terminal and beam index information used for sending data to the terminal.

According to a ninth aspect, a millimeter-wave cellular communication method is provided, where the method includes:

obtaining, by a terminal, beam index information corresponding to a millimeter-wave band; and

communicating, by the terminal by using a beam corresponding to the beam index information, with a millimeter-wave base station corresponding to the millimeter-wave band.

In a first possible implementation manner of the ninth aspect, the obtaining, by a terminal, beam index information corresponding to a millimeter-wave band includes:

receiving a radio resource reconfiguration message or a broadcast message sent by a master base station or the millimeter-wave base station, and obtaining the beam index information included in the radio resource reconfiguration message or the broadcast message; or

negotiating with a master base station or the millimeter-wave base station to agree on the beam index information; where

the master base station and the millimeter-wave base station are a same base station or different base stations.

With reference to the first possible implementation manner of the ninth aspect, in a second possible implementation manner of the ninth aspect, the communicating, by the terminal by using a beam corresponding to the beam index information, with a millimeter-wave base station corresponding to the millimeter-wave band includes:

selecting beams corresponding to some or all beam index information in the beam index information, to communicate with the millimeter-wave base station; or

determining first beam index information that is in the beam index information and is specified by the master base station or the millimeter-wave base station, and communicating with the millimeter-wave base station according to a beam corresponding to the first beam index information.

With reference to the ninth aspect, or the first or the second possible implementation manner of the ninth aspect, in a third possible implementation manner of the ninth aspect, each piece of the beam index information is corresponding to information about one precoding codebook or information about one group of antenna weights, or each of the beam index is corresponding to information about multiple precoding codebooks or information about multiple groups of antenna weights, and each precoding codebook or information about each group of antenna weights uniquely determines a beam.

With reference to the ninth aspect, or the first or the second possible implementation manner of the ninth aspect, in a fourth possible implementation manner of the ninth aspect, each piece of the beam index information is corresponding to a coverage area of one sector or one cell, or each piece of the beam index information is corresponding to a part of a coverage area of one sector or one cell;

the beam index information is one-level index information or N-level index information, N is an integer, and N≥2; and when the beam index information is the N-level index information, the $i^{th}$ level index information in the beam index information is associated with the $(i+1)^{th}$ level index information, where a coverage area of a beam corresponding to the $(i+1)^{th}$ level index information is not greater than a coverage area of a beam corresponding to the $i^{th}$ level index information, i is an integer, and 2≤i≤N.

With reference to the ninth aspect or the first possible implementation manner of the ninth aspect, in a fifth possible implementation manner of the ninth aspect, the beam index information includes second beam index information used for radio resource management RRM measurement, and the method further includes:

performing, by the terminal, RRM measurement according to a beam corresponding to the second beam index information, to obtain a first measurement result, where the first measurement result includes reference signal received power RSRP and/or reference signal received quality RSRQ; and sending, by the terminal, a first measurement report to the master base station or the millimeter-wave base station according to the first measurement result, where the first measurement report includes at least one of the following information: beam index information with highest RSRP and/or highest RSRQ, an RSRP measurement result and/or an RSRQ measurement result on a beam corresponding to the beam index information with highest RSRP and/or highest RSRQ, frequency information in which the beam index information with highest RSRP and/or highest RSRQ is located, serving cell information associated with the beam index information with highest RSRP and/or highest RSRQ, or neighboring cell information associated with the beam index information with highest RSRP and/or highest RSRQ; where

the serving cell information or the neighboring cell information is indicated by using a physical cell identifier PCI and/or a cell global identification CGI.

With reference to the fifth possible implementation manner of the ninth aspect, in a sixth possible implementation manner of the ninth aspect, the beam index information further includes third beam index information used for candidate RRM measurement, and the method further includes:

when the RSRP included in the first measurement result is less than a preconfigured threshold and/or when the RSRQ included in the first measurement result is less than a preconfigured threshold, starting, by the terminal, to perform RRM measurement according to a beam corresponding to the third beam index information.

With reference to the fifth possible implementation manner of the ninth aspect, in a seventh possible implementation manner of the ninth aspect, the beam index information further includes fourth beam index information used for intra-frequency measurement, and the method further includes:

obtaining, by the terminal, measurement gap period information associated with the fourth beam index information; and performing, by the terminal in a measurement gap indicated by the measurement gap period information, intra-frequency measurement on the millimeter-wave band according to a beam corresponding to the fourth beam index information.

With reference to the fifth possible implementation manner of the ninth aspect, in an eighth possible implementation manner of the ninth aspect, the communicating, by the terminal by using a beam corresponding to the beam index information, with a millimeter-wave base station corresponding to the millimeter-wave band includes:

communicating, by the terminal, with the millimeter-wave base station on the beam corresponding to the beam index information with highest RSRP and/or highest RSRQ.

With reference to the ninth aspect or the first possible implementation manner of the ninth aspect, in a ninth possible implementation manner of the ninth aspect, the method further includes:

determining, by the terminal from the beam index information, fifth beam index information used as a physical random access channel resource; and performing, by the terminal, random access according to a beam corresponding to the fifth beam index information.

With reference to the ninth possible implementation manner of the ninth aspect, in a tenth possible implementation manner of the ninth aspect, the determining, by the terminal from the beam index information, fifth beam index information used as a physical random access channel resource includes:

selecting a piece of beam index information from the beam index information as the fifth beam index information; or determining, as the fifth beam index information, beam index information that is in the beam index information and that is specified by the master base station or the millimeter-wave base station as the physical random access channel resource.

With reference to the ninth possible implementation manner of the ninth aspect, in an eleventh possible implementation manner of the ninth aspect, the performing, by the terminal, random access according to a beam corresponding to the fifth beam index information includes:

sending a random access preamble on the beam corresponding to the fifth beam index information; and receiving a random access response message on the beam corresponding to the fifth beam index information, or receiving a random access response message on the beam corresponding to the beam index information.

With reference to the tenth possible implementation manner of the ninth aspect, in a twelfth possible implementation manner of the ninth aspect, the random access response message includes sixth beam guide information, and the method further includes:

sending, by the terminal, a random access message on a beam corresponding to the sixth beam index information, where the random access message includes an identifier of the terminal; and receiving, by the terminal, a contention resolution message on a beam corresponding to the sixth beam index; or receiving, by the terminal, a contention resolution message on the beam corresponding to the beam index information, where the contention resolution message includes the identifier of the terminal; and

the identifier of the terminal is a cell radio network temporary identifier C-RNTI or a System Architecture Evolution-temporary mobile station identifier S-TMSI of the terminal.

In a thirteenth possible implementation manner of the ninth aspect, the method further includes:

receiving, by the terminal, sounding reference signal configuration information that is of a cell on the millimeter-wave band and is sent by the master base station or the millimeter-wave base station; and sending, by the terminal according to the sounding reference signal configuration information, a sounding reference signal on the beam corresponding to the beam index information.

According to a tenth aspect, a millimeter-wave cellular communication method is provided, where the method includes:

configuring, by a master base station for a terminal, beam index information corresponding to a millimeter-wave band, where the beam index information is used to instruct the terminal to communicate, by using a beam corresponding to the beam index information, with a millimeter-wave base station corresponding to the millimeter-wave band.

In a first possible implementation manner of the tenth aspect, the configuring, by a master base station for a terminal, beam index information corresponding to a millimeter-wave band includes:

sending a radio resource reconfiguration message or a broadcast message that includes the beam index information to the terminal; or negotiating with the terminal to determine the beam index information.

With reference to the tenth aspect or the first possible implementation manner of the tenth aspect, in a second possible implementation manner of the tenth aspect, the method further includes:

receiving, by the master base station, a measurement report sent by the terminal, where the measurement report is a measurement report that is sent by the terminal according to a measurement result of RRM measurement after the terminal performs the RRM measurement according to a beam corresponding to first beam index information included in the beam index information; and determining, by the master base station according to the measurement report, the millimeter-wave base station for sending data to the terminal and beam index information used for sending data to the terminal.

With reference to the tenth aspect or the first possible implementation manner of the tenth aspect, in a third possible implementation manner of the tenth aspect, the method further includes:

sending, by the master base station to the terminal, sounding reference signal configuration information of a cell on the millimeter-wave band, where the sounding reference signal configuration information is used to instruct the terminal to send a sounding reference signal on the beam corresponding to the beam index information.

With reference to the tenth aspect or the first possible implementation manner of the tenth aspect, in a fourth possible implementation manner of the tenth aspect, the method further includes:

sending, by the master base station, uplink measurement configuration information to the millimeter-wave base station, where the uplink measurement configuration information includes second beam index information, and the uplink measurement configuration information is used to instruct the millimeter-wave base station to measure, on a beam corresponding to the second beam index information, power of a sounding reference signal sent by the terminal.

According to an eleventh aspect, a millimeter-wave cellular communication method is provided, where the method includes:

configuring, by a millimeter-wave base station for a terminal, beam index information corresponding to a millimeter-wave band, where the beam index information is used to instruct the terminal to communicate, by using a beam corresponding to the beam index information, with a millimeter-wave base station corresponding to the millimeter-wave band.

In a first possible implementation manner of the eleventh aspect, the configuring, by a millimeter-wave base station for a terminal, beam index information corresponding to a millimeter-wave band includes:

sending a radio resource reconfiguration message or a broadcast message that includes the beam index information to the terminal; or negotiating with the terminal to determine the beam index information.

With reference to the eleventh aspect or the first possible implementation manner of the eleventh aspect, in a second possible implementation manner of the eleventh aspect, the method further includes:

receiving, by the millimeter-wave base station, a measurement report sent by the terminal, where the measurement report is a measurement report that is sent by the terminal according to a measurement result of RRM measurement after the terminal performs the RRM measurement according to a beam corresponding to first beam index information included in the beam index information; and sending, by the millimeter-wave base station, the measurement report to a base station controller, where the measurement report is used to instruct the base station controller to determine the millimeter-wave base station for sending data to the terminal and beam index information used for sending data to the terminal.

With reference to the eleventh aspect or the first possible implementation manner of the eleventh aspect, in a third possible implementation manner of the eleventh aspect, the method further includes:

sending, by the millimeter-wave base station to the terminal, sounding reference signal configuration information of a cell on the millimeter-wave band, where the sounding reference signal configuration information is used to instruct the terminal to send a sounding reference signal on the beam corresponding to the beam index information.

In a fourth possible implementation manner of the eleventh aspect, the method further includes:

receiving, by the millimeter-wave base station, a random access preamble that is sent by the terminal on a beam corresponding to second beam index information used as a physical random access channel resource; and sending, by the millimeter-wave base station, a random access response message on the beam corresponding to the second beam index information.

With reference to the fourth possible implementation manner of the eleventh aspect, in a fifth possible implementation manner of the eleventh aspect, the random access response message includes third beam guide information, and the method further includes:

receiving, by the millimeter-wave base station, a random access message on a beam corresponding to the third beam index information, where the random access message includes an identifier of the terminal; and sending, by the millimeter-wave base station, a contention resolution message on the beam corresponding to the third beam index, where the contention resolution message includes the identifier of the terminal; and
the identifier of the terminal is a cell radio network temporary identifier C-RNTI or a System Architecture Evolution-temporary mobile station identifier S-TMSI of the terminal.

With reference to any one of the eleventh aspect, or the first to the fifth possible implementation manners of the eleventh aspect, in a sixth possible implementation manner of the eleventh aspect, the method further includes:

receiving, by the millimeter-wave base station, uplink measurement configuration information sent by a master base station or the base station controller, where the uplink measurement configuration information includes fourth beam index information; measuring, by the millimeter-wave base station on a beam corresponding to the fourth beam index information, power of the sounding reference signal sent by the terminal; and sending, by the millimeter-wave base station to the base station controller, a measurement result that includes the power that is of the sounding reference signal and that is obtained by means of measurement, where the measurement result is used to instruct the base station controller to, when the power of the sounding reference signal is greater than a preset power threshold, instruct the millimeter-wave base station to prepare to communicate with the terminal.

According to a twelfth aspect, a millimeter-wave cellular communication method is provided, where the method includes:

sending, by a base station controller, uplink measurement configuration information to a millimeter-wave base station, where the uplink measurement configuration information includes beam index information, and the uplink measurement configuration information is used to instruct the millimeter-wave base station to measure, on a beam corresponding to the beam index information, power of a sounding reference signal sent by the terminal; receiving, by the base station controller, a measurement result that is sent by the millimeter-wave base station and that includes the power that is of the sounding reference signal and that is obtained by means of measurement; and when the power of the sounding reference signal is greater than a preset power threshold, instructing, by the base station controller, the millimeter-wave base station to prepare to communicate with the terminal; where the terminal communicates, by using the beam index information corresponding to a millimeter-wave band, millimeter-wave base stations corresponding to the millimeter-wave band.

In a first possible implementation manner of the twelfth aspect, the method further includes:

receiving, by the base station controller, a measurement report sent by the millimeter-wave base station, where the measurement report is a measurement report that is sent by the terminal according to a measurement result of RRM measurement after the terminal performs the RRM measurement according to a beam corresponding to first beam index information included in the beam index information; and determining, by the base station controller according to the measurement report, the millimeter-wave base station for sending data to the terminal and beam index information used for sending data to the terminal.

The technical solutions provided in the embodiments of the present invention bring the following beneficial effects:
At least one piece of beam index information corresponding to at least one millimeter-wave band is obtained, and communication is performed by using a beam corresponding to the at least one piece of beam index information with a millimeter-wave base station corresponding to the at least one millimeter-wave band, so as to resolve a problem in the prior art that available bandwidth is relatively small when a terminal performs cellular communication, extend a frequency range of terminal communication, increase a data transmission rate of the terminal, reduce signal fading and distortion during millimeter-wave communication between the terminal and a millimeter-wave base station, and reduce interference between users on a same channel.

**BRIEF DESCRIPTION OF DRAWINGS**

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a block diagram of a terminal according to an embodiment of the present invention;
FIG. 2 is a block diagram of a terminal according to an embodiment of the present invention;
FIG. 3 is a block diagram of a base station according to an embodiment of the present invention;
FIG. 4 is a block diagram of a base station according to an embodiment of the present invention;
FIG. 5 is a block diagram of a base station according to an embodiment of the present invention;

FIG. 6 is a block diagram of a base station according to an embodiment of the present invention;

FIG. 7 is a block diagram of a base station controller according to an embodiment of the present invention;

FIG. 8 is a block diagram of a base station controller according to an embodiment of the present invention;

FIG. 9 is a method flowchart of a millimeter-wave cellular communication method according to an embodiment of the present invention;

FIG. 10 is a method flowchart of a millimeter-wave cellular communication method according to an embodiment of the present invention;

FIG. 11 is a method flowchart of a millimeter-wave cellular communication method according to an embodiment of the present invention; and

FIG. 12 is a method flowchart of a millimeter-wave cellular communication method according to an embodiment of the present invention.

## DESCRIPTION OF EMBODIMENTS

To make the objectives, technical solutions, and advantages of the present invention clearer, the following further describes the embodiments of the present invention in detail with reference to the accompanying drawings.

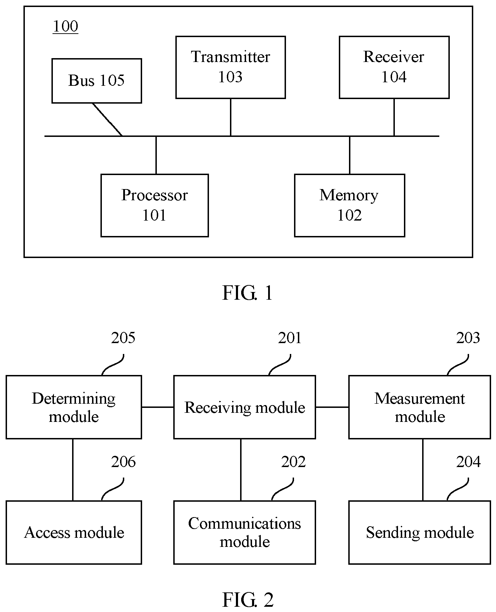

Referring to FIG. 1, FIG. 1 shows a block diagram of a terminal according to an embodiment of the present invention. The terminal 100 includes a bus 105, and a processor 101, a memory 102, a transmitter 103, and a receiver 104 that are connected to the bus. The memory 102 is configured to store several instructions, and the several instructions are configured to be executed by the processor 101.

The processor 101 is configured to control the receiver 104 to obtain at least one piece of beam index information corresponding to at least one millimeter-wave band; and

communicate, by using a beam corresponding to the at least one piece of beam index information, with a millimeter-wave base station corresponding to the at least one millimeter-wave band.

Optionally, the processor 101 is further configured to control the receiver 104 to receive a radio resource reconfiguration message or a broadcast message sent by a master base station or the millimeter-wave base station, and to obtain the at least one piece of beam index information included in the radio resource reconfiguration message or the broadcast message; or

the processor 101 is further configured to control the transmitter 103 and the receiver 104 to negotiate with a master base station or the millimeter-wave base station to agree on the at least one piece of beam index information.

The master base station and the millimeter-wave base station are a same base station or different base stations, and millimeter waves in different bands may be corresponding to a same millimeter-wave base station or different millimeter-wave base stations.

The processor 101 is further configured to select beams corresponding to some or all beam index information in the at least one piece of beam index information, to communicate with the millimeter-wave base station; or

the processor 101 is further configured to: determine first beam index information that is in the at least one piece of beam index information and is specified by the master base station or the millimeter-wave base station, and control the transmitter and the receiver to communicate with the millimeter-wave base station according to a beam corresponding to the first beam index information.

Each piece of the beam index information is corresponding to information about one precoding codebook or information about one group of antenna weights, or each of the beam index is corresponding to information about multiple precoding codebooks or information about multiple groups of antenna weights, and each precoding codebook or information about each group of antenna weights uniquely determines a beam.

The beam index information is further associated with beam characteristic information. The master base station sends particular characteristic information of different beams on the beams, so that UE identifies different beams according to different characteristic information. The master base station uses different reference signal sequences on different beams, or broadcasts beam index information of different beams on the beams. The UE may uniquely determine a particular beam according to the beam index information and characteristic information of the beams. The beam index information may also be used as a virtual cell identity, that is, a cell is further divided into different sectors or sub-sectors according to multiple relatively wide beams. Functions and usage methods of beam index information in following embodiments of the present invention are the same as those described in this embodiment, and details are not described again in the following.

Each piece of the beam index information is corresponding to a coverage area of one sector or one cell, or each piece of the beam index information is corresponding to a part of a coverage area of one sector or one cell. The beam index information is one-level index information or N-level index information, N is an integer, and N≥2. When the beam index information is the N-level index information, the $i^{th}$ level index information in the beam index information is associated with at least one piece of the $(i+1)^{th}$ level index information, where a coverage area of a beam corresponding to the $(i+1)^{th}$ level index information is not greater than a coverage area of a beam corresponding to the $i^{th}$ level index information, i is an integer, and 2≤i≤N.

When at least one piece of beam index information selected or determined by the processor 101 is the ith level index information, the transmitter 103 and the receiver 104 may communicate with the millimeter-wave base station by using the beam represented by the ith level index information, or may communicate with the millimeter-wave base station by using the beam corresponding to the at least one piece of (i+1)th level index information.

In this embodiment of the present invention, the millimeter-wave band is configured for the terminal as a service band, and the terminal communicates with the millimeter-wave base station on the configured millimeter-wave band, so as to extend a frequency range of terminal communication and increase a data transmission rate of the terminal. Steps in which the master base station configures, for the terminal, a cell corresponding to the millimeter-wave band, and the terminal communicates with the millimeter-wave base station may be as follows:

    (1) User equipment (English: User Equipment, UE for short) performs downlink radio resource management (English: Radio Resource Management, RRM for short) measurement on the millimeter-wave band to measure signal received power of a cell reference signal (English: cell reference signal, CRS for short) or a channel quality indicator reference signal (English: Channel State Indicator Reference Signal, CSI-RS for short) of the millimeter-wave band, and sends a first measurement report to the master base station or the millimeter-wave base station. The master base station determines, according to the first measurement report of the UE, that the UE enters a coverage area of the millimeter-wave base station and that one or more cells corresponding to a millimeter-wave frequency can be configured for the UE as one or more secondary cells (English: Secondary Cell, SCell for short).

RRM measurement herein refers to measurement used for mobility management, and is a measurement method filtered (filtered) by a radio resource control (English: Radio Resource Control, RRC for short) layer. For example, a filter method used in an LTE system is $F_n = (1- a) \cdot F_{n-1} + a \cdot M_n$, where $F_n$ is a latest filtered measurement result and is used to evaluate a criterion for triggering a measurement report, $F_{n-1}$ is a filtered measurement result that is calculated at a previous time, $M_n$ is a latest measurement result at a physical layer, and a is a coefficient determined according to different measurement requirements.

Before this, the master base station or the millimeter-wave base station configures, for the UE, measurement of one or more millimeter-wave bands. Configuration information includes at least configuration information such as a frequency range of a millimeter-wave band, a CSI-RS port number, a subframe, and a scrambling code, so that the UE performs measurement and reporting according to the configuration information.

Alternatively, the master base station or the millimeter-wave base station may determine, according to a first measurement report of the UE and/or UE location information in an existing band with a relatively low frequency, such as a Long Term Evolution (English: Long Term Evolution, LTE for short) band, that the UE enters the coverage area of the millimeter-wave base station. The existing band with a relatively low frequency is mainly provided by the master base station or the millimeter-wave base station, and the latter case requires that the millimeter-wave base station supports both the existing band with a relatively low frequency and the millimeter-wave band.

    (2) The master base station sends a request message to the millimeter-wave base station or a base station controller, to request to configure the millimeter-wave base station for the UE as an SCell.

The master base station adds, to the request message, at least a cell radio network temporary identifier (English: Cell Radio Network Temporary Identifier, C-RNTI for short) of the UE, radio bearer (English: Radio Bearer, RB for short) configuration information of the UE, radio resource configuration information of the master base station, identification information of one or more millimeter-wave base stations, and the like.

The one or more millimeter-wave base stations may have a same frequency range, and frequencies provided by the multiple millimeter-wave base stations may form a same SCell. In this case, the frequencies provided by the multiple millimeter-wave base stations have same physical cell identifiers (English: Physical Cell Identification, PCI for short) and same evolved cell global identifications (English: Evolved Cell Global Identification, ECGI for short). The multiple millimeter-wave base stations send same primary synchronization signals (English: Primary Synchronization Signal, PSS for short) and same secondary synchronization signals (English: Secondary Synchronization Signal, SSS for short). Alternatively, the multiple millimeter-wave base stations may send different PSSs and different SSSs to distinguish the different millimeter-wave base stations. The frequencies provided by the multiple millimeter-wave base stations may have different CSI-RS port configurations, so that the different millimeter-wave base stations can also be distinguished according to this. Alternatively, the frequencies provided by the multiple millimeter-wave base stations have same CSI-RS port configurations, and the millimeter-wave base stations are not distinguished.

The one or more millimeter-wave base stations may have different frequency ranges, and the frequencies provided by the multiple millimeter-wave base stations are separately used as different SCells. The frequencies provided by the multiple millimeter-wave base stations have different physical cell identifiers and different evolved cell global identifications, and the multiple millimeter-wave base stations send different PSSs and different SSSs.

(3) The millimeter-wave base station or the base station controller performs admission control, agrees to configure, for the UE, the cell corresponding to the at least one millimeter-wave band as an SCell, and sends a response message to the master base station.

The response message may carry the following information: sounding reference signal (English: Sounding Reference Signal, SRS) configuration information of the UE and a C-RNTI allocated to the UE. On the other hand, the SRS configuration information may also be uniformly configured by the master base station, so that the millimeter-wave base station does not provide the SRS configuration information. The millimeter-wave base station may not provide C-RNTI configuration information either, so that the UE uses, in both a PCell and the SCell, a C-RNTI allocated by the PCell.

The response message further carries at least the following information: a frequency range of a millimeter wave, common radio resource configuration information, and dedicated radio resource configuration information.

The millimeter-wave base station or the base station controller sends a notification message to all millimeter-wave base stations in a cluster (English: cluster), so that all the millimeter-wave base stations in the cluster prepare to measure an SRS of the UE, and prepare a resource according to measurement performed by all the millimeter-wave base stations or the notification message of the base station controller, to serve the UE.

(4) The master base station or the millimeter-wave base station sends a radio resource reconfiguration message to the UE, and configures an SCell for the UE.

The radio resource reconfiguration message carries at least radio resource configuration information related to the millimeter-wave base station, and may further carry radio resource configuration information of the master base station.

(5) The UE performs radio resource configuration, and sends a radio resource reconfiguration completion message to the master base station.
(6) The UE performs a random access process with one or more millimeter-wave base stations, so as to implement uplink synchronization with the one or more millimeter-wave base stations.
(7) The millimeter-wave base station or the base station controller determines, according to measurement of the SRS of the UE, the one or more millimeter-wave base stations that communicate with the UE within a specified time.

Optionally, the millimeter-wave base station or the base station controller may notify the master base station of identification information of the millimeter-wave base station.

(8) The one or more millimeter-wave base stations allocate resources to the UE, and perform data communication, including downlink and/or uplink communication, with the UE.
(9) The millimeter-wave base station measures the SRS of the UE to determine whether to continue to serve the UE.

Due to movement of the UE, the one or more millimeter-wave base stations may be unsuitable for data communication with the UE any longer. For example, when measured signal strength of the SRS of the UE is less than a specified threshold, the one or more millimeter-wave base stations determine that the one or more millimeter-wave base stations need to stop serving the UE.

(10) The millimeter-wave base station or the base station controller sends, to the master base station, a first measurement report and/or a message that determines whether to continue to serve the UE.

A millimeter-wave base station determined by the millimeter-wave base station or the base station controller to continue to serve the UE does not need to send the message to the master base station, and steps 10 to 13 are not needed.

(11) The master base station determines to update a set of millimeter-wave base stations that serve the UE.
(12) The master base station sends, to the millimeter-wave base station or the base station controller, identification information of a millimeter-wave base station that needs to serve the UE.
(13) The millimeter-wave base station or the base station controller dynamically determines, according to a measurement result of the SRS of the UE, that one or more millimeter-wave base stations allocate resources to the UE to perform downlink and/or uplink communication.

A millimeter-wave band signal has relatively large free space attenuation, and factors such as air absorption, and absorption and scattering of rain, fogs, buildings, and other objects also have relatively great impact on the millimeter-wave band signal. Therefore, in this embodiment of the present invention, particular beam index information is set for the terminal, and the terminal performs communication on a beam corresponding to the particular beam index information, so as to reduce signal fading and distortion of a radio signal that are caused in a transmission process by factors such as a space loss and a multipath effect when the terminal and the millimeter-wave base station perform millimeter-wave communication, and reduce interference between users on a same channel.

The terminal may perform random access, RRM measurement, sending of a sounding reference signal SRS, and the like by using the at least one piece of beam index information corresponding to the at least one millimeter-wave band. For details, refer to the following steps.

The terminal selects beams corresponding to some or all beam index information in the at least one piece of beam index information, to communicate with the millimeter-wave base station. Alternatively, the terminal may determine first beam index information that is in the at least one piece of beam index information and is specified by the master base station or the millimeter-wave base station, and communicate with the millimeter-wave base station according to a beam corresponding to the first beam index information.

The terminal itself may select the beam corresponding to some or all of the at least one piece of beam index information to perform data receiving and sending. Alternatively, the master base station or the millimeter-wave base station specifies one or more pieces of beam index information in the at least one piece of beam index information, and the terminal performs data receiving and sending according to the beam index information specified by the master base station or the millimeter-wave base station.

In addition, the terminal may further perform random access, RRM measurement, sending of a sounding reference signal SRS, and the like by using the at least one piece of beam index information corresponding to the at least one millimeter-wave band. Details are as follows:

Optionally, the at least one piece of beam index information includes second beam index information used for radio resource management RRM measurement.

The processor 101 is further configured to:

perform RRM measurement according to a beam corresponding to the second beam index information, to obtain a first measurement result, where the first measurement result includes reference signal received power RSRP and/or reference signal received quality RSRQ.

In a millimeter-wave cell, the UE may move quickly between different beams. Therefore, a requirement on RRM measurement used for beam management may be stricter than that in an existing LTE system, for example, evaluation is performed every tens of milliseconds to determine whether a measurement report criterion is met. Further, in a broad sense, RRM measurement used for millimeter-wave cell beam management may also refer to measurement performed in a beam training manner. For example, the master base station and the UE respectively send and receive a measurement signal on multiple beams in a cell range, to find a best matched beam pair. When communication is performed between such a pair of sending beam and receiving beam, receiving efficiency is the highest and transmitted data is the most reliable. Measurement in such a case may be filtered by the RRC layer, and a measurement requirement is stricter; or measurement in such a case does not need to be filtered by the RRC layer, and a current measurement result is directly used. In this way, a better transmission effect may be achieved between the master base station and the UE by using smaller transmit power. Meanings of RRM measurement for millimeter-wave cell beam management in the following embodiments of the present invention are the same as those described in this embodiment, and details are not described again in the following.

The processor 101 is further configured to: control the transmitter 103 to send a first measurement report to the master base station or the millimeter-wave base station according to the first measurement result, where the first measurement report includes at least one of the following information: at least one piece of beam index information with highest RSRP and/or highest RSRQ, an RSRP measurement result and/or an RSRQ measurement result on a beam corresponding to the at least one piece of beam index information with highest RSRP and/or highest RSRQ, frequency information in which the at least one piece of beam index information with highest RSRP and/or highest RSRQ is located, serving cell information associated with the at least one piece of beam index information with highest RSRP and/or highest RSRQ, or neighboring cell information associated with the at least one piece of beam index information with highest RSRP and/or highest RSRQ.

The serving cell information or the neighboring cell information is indicated by using a physical cell identifier PCI and/or a cell global identification CGI.

RRM measurement is performed in multiple preconfigured fixed beam directions/widths. The UE reports RSRP/RSRQ measured on one or more beams with best signal quality, and corresponding beam index information is included during the reporting, so that the master base station performs scheduling according to the first measurement report.

Alternatively, the UE may adaptively choose to perform measurement on multiple beams, and choose to report RSRP/RSRQ information on one or more beams with best signal quality. Beam index information, for example, information about multiple antenna weights, that is selected by the UE is included during the reporting.

Optionally, the at least one piece of beam index information further includes third beam index information used for candidate RRM measurement.

The processor 101 is further configured to: when the RSRP included in the first measurement result is less than a preconfigured threshold and/or when the RSRQ included in the first measurement result is less than a preconfigured threshold, control the transmitter 103 and the receiver 104 to start to perform RRM measurement according to a beam corresponding to the third beam index information.

If RSRP/RSRQ that is obtained by means of measurement by the UE on a beam corresponding to a piece of beam index information is greater than a preset threshold, the UE may not measure a signal on another beam, or may measure a signal on another beam by using a longer period, so as to select, from a same cell, a better beam range that is relatively wide as a data communication range.

Alternatively, the UE may select multiple relatively wide beam ranges that have both relatively good signal quality and relatively good space isolation to perform measurement. Measurement periods may be the same, or may be different to support concurrent working of multiple beams.

Optionally, the at least one piece of beam index information further includes fourth beam index information used for intra-frequency measurement.

The processor 101 is further configured to:

control the transmitter 103 and the receiver 104 to obtain measurement gap period information associated with the fourth beam index information; and perform, in a measurement gap indicated by the measurement gap period information, intra-frequency measurement on the at least one millimeter-wave band according to a beam corresponding to the fourth beam index information.

When the UE needs to be adjusted to a direction angle corresponding to another beam to measure a synchronization channel (English: Synchronization Channel, SCH for short) signal, a common reference signal (English: Common Reference String, CRS for short), a CSI-RS, or the like of a neighboring cell, even for intra-frequency measurement, a serving cell cannot schedule the UE in multiple beam directions, unless the UE has more antennas and radio frequency (English: RadioFrequency, RF for short) links. Therefore, the master base station or the base station controller may preconfigure measurement gap period information for the terminal, and associate the measurement gap period information with beam index information used for intra-frequency measurement. Intra-frequency measurement is performed only in a measurement gap indicated by the measurement gap period information.

In this embodiment, a trigger condition may further be set for an event of sending the first measurement report. For example, when RSRP on a beam corresponding to a piece of beam index information is less than a preset value, and RSRP on a beam corresponding to another piece of beam index information is still higher than the preset value, the first measurement report is triggered.

Optionally, the processor 101 is further configured to communicate with the millimeter-wave base station on the beam corresponding to the at least one piece of beam index information with highest RSRP and/or highest RSRQ.

With reference to the RRM measurement method shown in this step, when communicating with the millimeter-wave base station, the terminal may perform communication on the beam corresponding to the at least one piece of beam index information with highest RSRP and/or highest RSRQ.

Optionally, the processor 101 is further configured to:

determine, from the at least one piece of beam index information, fifth beam index information used as a physical random access channel resource, and perform random access according to a beam corresponding to the fifth beam index information.

The processor 101 is further configured to select a piece of beam index information from the at least one piece of beam index information as the fifth beam index information; or the processor 101 is further configured to determine, as the fifth beam index information, beam index information that is in the at least one piece of beam index information and that is specified by the master base station or the millimeter-wave base station and used as the physical random access channel resource.

Optionally, the processor 101 is further configured to:

control the transmitter 103 to send a random access preamble on the beam corresponding to the fifth beam index information; and control the receiver 104 to receive a random access response message on the beam corresponding to the fifth beam index information, or to receive a random access response message on the beam corresponding to the at least one piece of beam index information.

The random access process may be contention-based random access, or may be non-contention-based random access. In a non-contention-based random access process, the master base station or the base station controller allocates, to the terminal, a millimeter-wave base station for access and beam index information used for access, that is, the fifth beam index information. The terminal sends the random access preamble (preamble, that is, msg1) on the beam corresponding to the fifth beam index information. After a millimeter-wave base station in a direction of the beam corresponding to the fifth beam index information receives the msg1, if the millimeter-wave base station is a base station, for random access, allocated by the master base station or the base station controller to the terminal, the millimeter-wave base station sends the random access response message (msg2) on the beam corresponding to the fifth beam index information. The terminal receives the random access response message on the beam corresponding to the fifth beam index information. The random access response message may include information for at least one UE. These UEs send the msg1 by using a same time-frequency domain resource. The UE determines, according to an identifier such as a random access-radio network temporary identifier (English: random access-radio network temperoary identifier, RA-RNTI for short) on a physical downlink control channel (English: Physical Downlink Control Channel, PDCCH for short), whether the msg2 includes the information for the UE. When the RA-RNTI is consistent with the time-frequency resource used when the UE sends the random access preamble, the UE determines that the msg2 may include the information for the UE. Further, the UE finally determines, according to whether a preamble included in the msg2 is consistent with the preamble used when the UE sends the msg1, whether the msg2 includes the information for the UE. When the terminal receives the msg2 only on the beam corresponding to the fifth beam index information, a calculation formula of the RA-RNTI may use a calculation method in prior-art LTE. The calculation formula is as follows:

$$RA\text{-}RNTI=1+t\_id+10*f\_id;$$

where

$t\_id$ refers to a subframe (subframe) in which a physical random access channel (English: physical random access channel, PRACH) resource used when the UE sends the msg1 is located, and $f\_id$ refers to an index of the PRACH resource in the subframe. For example, for a time division duplex (English: time division duplex, TDD for short) mode, multiple PRACH channel resources may be configured in different frequency ranges for a subframe, and a frequency range of each PRACH channel is corresponding to a piece of index information of a frequency domain.

Alternatively, the terminal may receive a random access response message msg2 on the beam corresponding to the at least one piece of beam index information. In this case, the msg2 may include information about UE that sends the msg1 on beams corresponding to different beam indexes. A calculation formula of the RA-RNTI may include beam index information, so as to indicate a beam that is corresponding to a beam index and on which the UE sends the msg1 message. Therefore, the UE can more accurately determine whether the msg2 includes the information about the UE. The calculation formula of the RA-RNTI is as follows:

$$RA\text{-}RNTI=1+t\_id+10*f\_id+beam\_idx;$$

where beam_idx refers to beam index information used when the UE sends the msg1.

At this point, non-contention-based random access is completed.

Further, the random access response message includes sixth beam guide information.

Optionally, the processor 101 is further configured to:

control the transmitter 103 to send a random access message on a beam corresponding to the sixth beam index information, where the random access message includes an identifier of the terminal; and
control the receiver 104 to receive a contention resolution message on the beam corresponding to the sixth beam index, or to receive a contention resolution message on the beam corresponding to the at least one piece of beam index information, where the contention resolution message includes the identifier of the terminal.

The identifier of the terminal is a cell radio network temporary identifier C-RNTI or a System Architecture Evolution-temporary mobile station identifier S-TMSI of the terminal.

In a contention-based random access process, the master base station or the base station controller allocates, to the terminal, only the beam index information used for access, that is, the fifth beam index information, but does not specify, for the terminal, a millimeter-wave base station for access. The terminal sends the random access preamble (msg1) on the beam corresponding to the fifth beam index information. After receiving the msg1, the millimeter-wave base station in the direction of the beam corresponding to the fifth beam index information sends the random access response message (msg2) on the beam corresponding to the fifth beam index information. The terminal receives the msg2 on the beam corresponding to the fifth beam index information, and the UE uses the formula $RA\text{-}RNTI=1+t\_id+10*f\_id$ to determine whether the msg2 includes the information for the UE. Alternatively, the terminal may receive the msg2 on the beam corresponding to the at least one piece of beam index information, and the UE uses the formula $RA\text{-}RNTI=1+t\_id+10*f\_id+beam\_idx$ to determine whether the msg2 includes the information for the UE. The msg2 includes the sixth beam guide information, and the terminal sends the random access message (msg3) according to the sixth beam index information. The msg3 includes the identifier of the terminal, and the terminal receives the msg3 on the beam corresponding to the sixth beam index information. If the terminal is allowed to access, an msg4 that includes the identifier of the terminal is sent on the same beam. After receiving the msg4 and detecting that the msg4 includes the identifier of the terminal, the terminal confirms that the access is successful. For random access processes in subsequent embodiments, methods for determining, by the UE, whether the msg2 includes the information for the UE are the same as those in this embodiment, and details are not described in the present invention. In the contention-based random access process, the UE itself may select the random access preamble and a random access time-frequency domain resource, and the master base station or the millimeter-wave base station may not allocate, to the terminal, the beam index information used for access. This means that the fifth beam index information may be any beam index information. The UE sends the msg1 on a beam corresponding to beam index information currently used by the UE, and the millimeter-wave base station needs to know the beam index information used by the UE, so as to send the random access response message (msg2) for the UE; otherwise, the millimeter-wave base station needs to send the msg2 on beams corresponding to multiple pieces of beam index information. To prevent the millimeter-wave base station from sending the msg2 on beams corresponding to multiple pieces of beam index information, to reduce overheads and a delay, the master base station or the millimeter-wave base station may group in advance random access preambles of a millimeter-wave cell according to different beam index information, and configure grouping information for the UE. The UE chooses to send a random access preamble corresponding to the beam index information currently used by the UE. After receiving the random access preamble, the millimeter-wave base station may learn, according to a mapping relationship between a random access preamble and beam index information, the beam index information used by the UE, and send the msg2 on the beam corresponding to the beam index information. Alternatively, the master base station or the millimeter-wave base station may group in advance random access time-frequency domain resources of a millimeter-wave cell according to different beam index information, and configure grouping information for the UE. The UE sends the msg1 on a random access time-frequency domain resource corresponding to the beam index information currently used by the UE. After receiving the msg1, the millimeter-wave base station may learn, according to a mapping relationship between a random access time-frequency domain resource and beam index information, the beam index information used by the UE, and send the msg2 on the beam corresponding to the beam index information. For contention-based random access processes in subsequent embodiments, methods for skipping allocating, by the master base station or the millimeter-wave base station to the terminal, the beam index information used for access are the same as those in this embodiment, and details are not described in the present invention.

In another access method, the UE may choose, according to the measurement result of RRM measurement in the foregoing step 106, to send, in a beam direction, the msg1 to the millimeter-wave base station, for example, send the msg1 on a beam that is with a best signal in an RRM measurement result reported at a previous time and is corresponding to a piece of beam index information. The millimeter-wave base station detects a random access preamble in the msg1 in an omnidirectional receiving manner.

The millimeter-wave base station sends the msg2 in a direction in which the msg1 is received, and the msg2 includes information about multiple UEs in the direction. Because sending beams generated by the different UEs in the direction may be different, the millimeter-wave base station adapts to beams of the multiple UEs to generate new downlink beams, so that all UEs that use a same time-frequency domain resource can receive the msg2. In addition, because the UE may also move to another direction, the msg2 needs to be sent in different directions, and content in the msg2 is different. For example, included random access preambles are different due to different UEs. The UE receives the msg2 only in a direction in which the msg1 is sent.

In addition, in the contention-based random access process, the UE may also simultaneously use multiple beams to send the msg1. Therefore, a probability that the master base station detects the msg1 can be increased.

Optionally, the processor 101 is further configured to:

control the receiver 104 to receive sounding reference signal configuration information that is of at least one cell on the at least one millimeter-wave band and is sent by the master base station or the millimeter-wave base station; and
control the transmitter 103 to send, according to the sounding reference signal configuration information, a sounding reference signal on the beam corresponding to the at least one piece of beam index information.

The master base station or a millimeter-wave base station controller instructs specific millimeter-wave base stations to measure SRSs of specific UEs. The UEs send SRSs according to beams corresponding to multiple pieces of preconfigured beam index information. The millimeter-wave base station measures an SRS of specified UE to determine whether the millimeter-wave base station is suitable for serving the UE. If yes, the millimeter-wave base station notifies the base station controller or another millimeter-wave base station of information about a time-frequency-space domain resource that is to be allocated by the millimeter-wave base station to the UE, so as to avoid interference.

The master base station may specify seventh beam index information for the millimeter-wave base station, and the millimeter-wave base station measures power of the sounding reference signal of the terminal according to the seventh beam index information. Alternatively, the millimeter-wave base station itself may determine seventh beam index information, and measure power of the sounding reference signal of the terminal according to the seventh beam index information.

After measuring the power of the sounding reference signal sent by the terminal, the millimeter-wave base station sends a measurement result of the sounding reference signal to the base station controller. Before the millimeter-wave base station communicates with the terminal, the base station controller determines, according to the power of the sounding reference signal sent by the terminal, whether to serve the terminal. Alternatively, in a process in which the millimeter-wave base station communicates with the terminal, the base station controller determines, according to the power of the sounding reference signal sent by the terminal, whether to continue to serve the terminal. For example, if the power of the sounding reference signal sent by the terminal is less than a threshold, it indicates that the terminal is unsuitable for communicating with the millimeter-wave base station any longer, and the base station controller may send a detection report to the master base station, to request the master base station to update a set of millimeter-wave base stations that serve the terminal. If the power of the sounding reference signal sent by the terminal is not less than the threshold, the detection report is not sent.

When the base station updates the set of millimeter-wave base stations that serve the UE, an added millimeter-wave base station (a target mmB) notifies an mmB that currently serves the terminal of configuration information of a cell corresponding to the added millimeter-wave base station, such as a broadcast control channel (English: broadcast control channel, BCH for short), an SSH, a CRS, a CSI-RS, a demodulation reference signal (English: Demodulation Reference Signal, DMRS for short), a physical random access channel, and beam configuration information included in measurement configuration. The millimeter-wave base station that currently serves the terminal sends the configuration information to the UE, so that the UE quickly accesses the target millimeter-wave base station.

In conclusion, the terminal provided in this embodiment of the present invention obtains at least one piece of beam index information corresponding to at least one millimeter-wave band, and communicates, by using a beam corresponding to the at least one piece of beam index information, with a millimeter-wave base station corresponding to the at least one millimeter-wave band, so as to resolve a problem in the prior art that available bandwidth is relatively small when a terminal performs cellular communication, extend a frequency range of terminal communication, and increase a data transmission rate of the terminal.

In addition, the terminal provided in this embodiment of the present invention performs communication, RRM measurement, and random access on a beam corresponding to specified beam index information, so as to reduce signal fading and distortion during millimeter-wave communication between a terminal and a millimeter-wave base station, and reduce interference between users on a same channel.

Referring to FIG. 2, FIG. 2 shows a block diagram of a terminal according to an embodiment of the present invention. The terminal may include:

a receiving module 201, configured to obtain at least one piece of beam index information corresponding to at least one millimeter-wave band; and
a communications module 202, configured to communicate, by using a beam corresponding to the at least one piece of beam index information, with a millimeter-wave base station corresponding to the at least one millimeter-wave band.

Optionally, the receiving module 201 is further configured to:

receive a radio resource reconfiguration message or a broadcast message sent by a master base station or the millimeter-wave base station; and
obtain the at least one piece of beam index information included in the radio resource reconfiguration message or the broadcast message.

The communications module 202 is further configured to negotiate with the master base station or the millimeter-wave base station to agree on the at least one piece of beam index information.

The master base station and the millimeter-wave base station are a same base station or different base stations.

Optionally, the communications module 202 is further configured to:

select beams corresponding to some or all beam index information in the at least one piece of beam index information, to communicate with the millimeter-wave base station; or
determine first beam index information that is in the at least one piece of beam index information and is specified by the master base station or the millimeter-wave base station, and communicate with the millimeter-wave base station according to a beam corresponding to the first beam index information.

Optionally, each piece of the beam index information is corresponding to information about one precoding codebook or information about one group of antenna weights, or each of the beam index is corresponding to information about multiple precoding codebooks or information about multiple groups of antenna weights, and each precoding codebook or information about each group of antenna weights uniquely determines a beam.

Optionally, each piece of the beam index information is corresponding to a coverage area of one sector or one cell, or each piece of the beam index information is corresponding to a part of a coverage area of one sector or one cell.

The beam index information is one-level index information or N-level index information, N is an integer, and N≥2.

When the beam index information is the N-level index information, the $i^{th}$ level index information in the beam index information is associated with at least one piece of the $(i+1)^{th}$ level index information, a coverage area of a beam corresponding to the $(i+1)^{th}$ level index information is not greater than a coverage area of a beam corresponding to the $i^{th}$ level index information, i is an integer, and 2≤i≤N.

Optionally, the at least one piece of beam index information includes second beam index information used for radio resource management RRM measurement, and the terminal further includes:

a measurement module 203, configured to perform RRM measurement according to a beam corresponding to the second beam index information, to obtain a first measurement result, where the first measurement result includes reference signal received power RSRP and/or reference signal received quality RSRQ; and

a sending module 204, configured to send a first measurement report to the master base station according to the first measurement result, where the first measurement report includes at least one of the following information: at least one piece of beam index information with highest RSRP and/or highest RSRQ, an RSRP measurement result and/or an RSRQ measurement result on a beam corresponding to the at least one piece of beam index information with highest RSRP and/or highest RSRQ, frequency information in which the at least one piece of beam index information with highest RSRP and/or highest RSRQ is located, serving cell information associated with the at least one piece of beam index information with highest RSRP and/or highest RSRQ, or neighboring cell information associated with the at least one piece of beam index information with highest RSRP and/or highest RSRQ.

The serving cell information or the neighboring cell information is indicated by using a physical cell identifier PCI and/or a cell global identification CGI.

Optionally, the at least one piece of beam index information further includes third beam index information used for candidate RRM measurement, and the measurement module 203 is further configured to:
when the RSRP included in the first measurement result is less than a preconfigured threshold and/or when the RSRQ included in the first measurement result is less than a preconfigured threshold, start to perform RRM measurement according to a beam corresponding to the third beam index information.

Optionally, the at least one piece of beam index information further includes fourth beam index information used for intra-frequency measurement.

The receiving module 201 is further configured to obtain measurement gap period information associated with the fourth beam index information.

The measurement module 203 is further configured to perform, in a measurement gap indicated by the measurement gap period information, intra-frequency measurement on the at least one millimeter-wave band according to a beam corresponding to the fourth beam index information.

Optionally, the communications module 202 is further configured to communicate, by the terminal, with the millimeter-wave base station on the beam corresponding to the at least one piece of beam index information with highest RSRP and/or highest RSRQ.

Optionally, the terminal further includes:

a determining module 205, configured to determine, from the at least one piece of beam index information, fifth beam index information used as a physical random access channel resource; and

an access module 206, configured to perform random access according to a beam corresponding to the fifth beam index information.

Optionally, the determining module 205 is specifically configured to:

select a piece of beam index information from the at least one piece of beam index information as the fifth beam index information; or

determine, as the fifth beam index information, beam index information that is in the at least one piece of beam index information and that is specified by the master base station or the millimeter-wave base station as the physical random access channel resource.

Optionally, the sending module 204 is further configured to send a random access preamble on the beam corresponding to the fifth beam index information.

The receiving module 201 is further configured to:

receive a random access response message on the beam corresponding to the fifth beam index information; or

receive a random access response message on the beam corresponding to the at least one piece of beam index information.

Optionally, the random access response message includes sixth beam guide information.

The sending module 204 is further configured to send a random access message on a beam corresponding to the sixth beam index information, where the random access message includes an identifier of the terminal.

The receiving module 201 is further configured to:

receive a contention resolution message on the beam corresponding to the sixth beam index; or

receive a contention resolution message on the beam corresponding to the at least one piece of beam index information, where the contention resolution message includes the identifier of the terminal.

The identifier of the terminal is a cell radio network temporary identifier C-RNTI or a System Architecture Evolution-temporary mobile station identifier S-TMSI of the terminal.

Optionally, the receiving module 201 is further configured to receive sounding reference signal configuration information that is of a cell on the at least one millimeter-wave band and is sent by the master base station or the millimeter-wave base station.

The sending module 204 is further configured to send, according to the sounding reference signal configuration information, a sounding reference signal on the beam corresponding to the at least one piece of beam index information.

In conclusion, the terminal provided in this embodiment of the present invention obtains at least one piece of beam index information corresponding to at least one millimeter-wave band, and communicates, by using a beam corresponding to the at least one piece of beam index information, with a millimeter-wave base station corresponding to the at least one millimeter-wave band, so as to resolve a problem in the prior art that available bandwidth is relatively small when a terminal performs cellular communication, extend a frequency range of terminal communication, and increase a data transmission rate of the terminal.

In addition, the terminal provided in this embodiment of the present invention performs communication, RRM measurement, and random access on a beam corresponding to specified beam index information, so as to reduce signal fading and distortion during millimeter-wave communication between a terminal and a millimeter-wave base station, and reduce interference between users on a same channel.

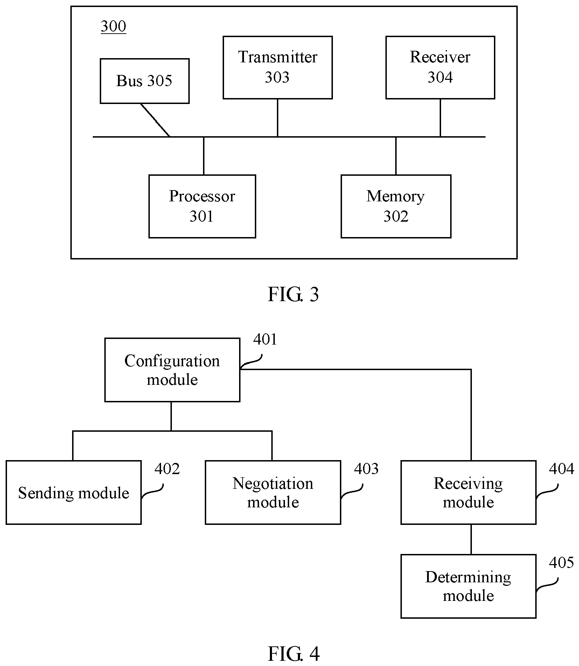

Referring to FIG. 3, FIG. 3 shows a block diagram of a base station according to an embodiment of the present invention. The base station may be the master base station in the embodiment shown in FIG. 1, such as an LTE-A base station. The base station 300 includes a bus 305, and a processor 301, a memory 302, a transmitter 303, and a receiver 304 that are connected to the bus. The memory 302 is configured to store several instructions, and the several instructions are configured to be executed by the processor 301.

The processor 301 is configured to configure, for a terminal, at least one piece of beam index information corresponding to at least one millimeter-wave band, where the at least one piece of beam index information is used to instruct the terminal to communicate, by using a beam corresponding to the at least one piece of beam index information, with a millimeter-wave base station corresponding to the at least one millimeter-wave band.

For steps in which the terminal performs communication, random access, RRM measurement, and sending of an SRS signal according to the at least one piece of beam index information, reference may be made to descriptions in the embodiment corresponding to FIG. 1, and details are not described herein again.

Optionally, the processor 301 is further configured to control the transmitter 303 to send a radio resource reconfiguration message or a broadcast message that includes the at least one piece of beam index information to the terminal; or

the processor 301 is further configured to negotiate with the terminal to determine the at least one piece of beam index information.

Specifically, the master base station may send the radio resource reconfiguration message that includes the at least one piece of beam index information to the terminal, or the master base station may negotiate with the terminal to determine the at least one piece of beam index information.

Optionally, the processor 301 is further configured to:

control the receiver 304 to receive a measurement report sent by the terminal, where the measurement report is a report that is sent by the terminal according to a measurement result of RRM measurement after the terminal performs the RRM measurement according to a beam corresponding to first beam index information included in the at least one piece of beam index information; and

determine, according to the measurement report, the millimeter-wave base station for sending data to the terminal and beam index information used for sending data to the terminal.

The measurement report is the report that is sent by the terminal according to the measurement result of the RRM measurement after the terminal performs the RRM measurement according to the beam corresponding to the first beam index information included in the at least one piece of beam index information.

For a specific process of performing, by the terminal, the RRM measurement according to the beam corresponding to the first beam index information, reference may be made to descriptions in the embodiment corresponding to FIG. 1, and details are not described herein again. In addition, the first beam index information in this embodiment is equivalent to the second beam index information in the embodiment shown in FIG. 1.

The master base station may determine, according to the measurement report, the millimeter-wave base station for sending data to the terminal and the beam index information used for sending data to the terminal.

Optionally, the processor 301 is further configured to control the transmitter 303 to send, to the terminal, sounding reference signal configuration information of at least one cell on the at least one millimeter-wave band, where the sounding reference signal configuration information is used to instruct the terminal to send a sounding reference signal on the beam corresponding to the at least one piece of beam index information.

The processor 301 is further configured to control the transmitter 303 to send uplink measurement configuration information to the millimeter-wave base station, where the uplink measurement configuration information includes second beam index information, and the uplink measurement configuration information is used to instruct the millimeter-wave base station to measure, on a beam corresponding to the second beam index information, power of the sounding reference signal sent by the terminal.

The master base station or a base station controller may specify that specific millimeter-wave base stations measure power of sounding reference signals of specific terminals. Specifically, the master base station or the base station controller instructs the terminal to send the SRS on the beam corresponding to the at least one piece of beam index information, and instructs the millimeter-wave base station to measure, on a beam corresponding to particular beam index information (the second beam index information), the sounding reference signal of the terminal. The second beam index information in this embodiment of the present invention and the seventh beam index information in the embodiment shown in FIG. 1 have a same function.

In addition, alternatively, the millimeter-wave base station itself may determine the second beam index information, and measure the power of the sounding reference signal of the terminal according to the second beam index information.

After measuring the power of the sounding reference signal sent by the terminal, the millimeter-wave base station sends a measurement result of the sounding reference signal to the base station controller. Before the millimeter-wave base station communicates with the terminal, the base station controller determines, according to the power of the sounding reference signal sent by the terminal, whether to serve the terminal. Alternatively, in a process in which the millimeter-wave base station communicates with the terminal, the base station controller determines, according to the power of the sounding reference signal sent by the terminal, whether to continue to serve the terminal. For example, if the power of the sounding reference signal sent by the terminal is less than a threshold, it indicates that the terminal is unsuitable for communicating with the millimeter-wave base station any longer, and the base station controller may send a detection report to the master base station, to request the master base station to update a set of millimeter-wave base stations that serve the terminal. If the power of the sounding reference signal sent by the terminal is not less than the threshold, the detection report is not sent.

In conclusion, the base station provided in this embodiment of the present invention configures, for a terminal, at least one piece of beam index information corresponding to at least one millimeter-wave band, so that the terminal communicates, by using a beam corresponding to the at least one piece of beam index information, with a millimeter-wave base station corresponding to the at least one millimeter-wave band, so as to resolve a problem in the prior art that available bandwidth is relatively small when a terminal performs cellular communication, extend a frequency range of terminal communication, increase a data transmission rate of the terminal, reduce signal fading and distortion during millimeter-wave communication between the terminal and a millimeter-wave base station, and reduce interference between users on a same channel.

Referring to FIG. 4, FIG. 4 shows a block diagram of a base station according to an embodiment of the present invention. The base station may be the master base station in the embodiment shown in FIG. 1, such as an LTE-A base station. The base station may include:

a configuration module 401, configured to configure, for a terminal, at least one piece of beam index information corresponding to at least one millimeter-wave band, where the at least one piece of beam index information is used to instruct the terminal to communicate, by using a beam corresponding to the at least one piece of beam index information, with a millimeter-wave base station corresponding to the at least one millimeter-wave band.

Optionally, the base station further includes a sending module 402, configured to send a radio resource reconfiguration message or a broadcast message that includes the at least one piece of beam index information to the terminal; or

the base station further includes a negotiation module 403, configured to negotiate with the terminal to determine the at least one piece of beam index information.

Optionally, the base station further includes:

a receiving module 404, configured to receive a measurement report sent by the terminal, where the measurement report is a report that is sent by the terminal according to a measurement result of RRM measurement after the terminal performs the RRM measurement according to a beam corresponding to first beam index information included in the at least one piece of beam index information; and

a determining module 405, configured to determine, according to the measurement report, the millimeter-wave base station for sending data to the terminal and beam index information used for sending data to the terminal.

Optionally,
the sending module 402 is further configured to send, to the terminal, sounding reference signal configuration information of at least one cell on the at least one millimeter-wave band, where the sounding reference signal configuration information is used to instruct the terminal to send a sounding reference signal on the beam corresponding to the at least one piece of beam index information.

Optionally,
the sending module 402 is further configured to send uplink measurement configuration information to the millimeter-wave base station, where the uplink measurement configuration information includes second beam index information, and the uplink measurement configuration information is used to instruct the millimeter-wave base station to measure, on a beam corresponding to the second beam index information, power of the sounding reference signal sent by the terminal.

In conclusion, the base station provided in this embodiment of the present invention configures, for a terminal, at least one piece of beam index information corresponding to at least one millimeter-wave band, so that the terminal communicates, by using a beam corresponding to the at least one piece of beam index information, with a millimeter-wave base station corresponding to the at least one millimeter-wave band, so as to resolve a problem in the prior art that available bandwidth is relatively small when a terminal performs cellular communication, extend a frequency range of terminal communication, increase a data transmission rate of the terminal, reduce signal fading and distortion during millimeter-wave communication between the terminal and a millimeter-wave base station, and reduce interference between users on a same channel.

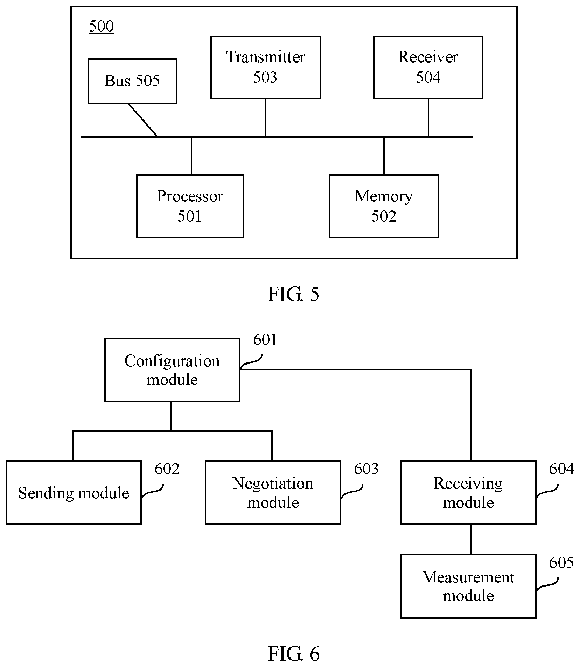

Referring to FIG. 5, FIG. 5 shows a block diagram of a base station according to an embodiment of the present invention. The base station may be the millimeter-wave base station (English: Millimeter wave Base, mmB for short) in the embodiment shown in FIG. 1. The base station 500 includes a bus 505, and a processor 501, a memory 502, a transmitter 503, and a receiver 504 that are connected to the bus. The memory 502 is configured to store several instructions, and the several instructions are configured to be executed by the processor 501.

The processor 501 is configured to configure, for a terminal, at least one piece of beam index information corresponding to at least one millimeter-wave band, where the at least one piece of beam index information is used to instruct the terminal to communicate, by using a beam corresponding to the at least one piece of beam index information, with a millimeter-wave base station corresponding to the at least one millimeter-wave band.

Optionally, the processor 501 is further configured to control the transmitter 503 to send a radio resource reconfiguration message or a broadcast message that includes the at least one piece of beam index information to the terminal; or

the processor 501 is further configured to negotiate with the terminal to determine the at least one piece of beam index information.

Optionally, the processor 501 is further configured to:

control the receiver 504 to receive a measurement report sent by the terminal, where the measurement report is a measurement report that is sent by the terminal according to a measurement result of RRM measurement after the terminal performs the RRM measurement according to a beam corresponding to first beam index information included in the at least one piece of beam index information; and
control the transmitter 503 to send the measurement report to a base station controller, where the measurement report is used to instruct the base station controller to determine the millimeter-wave base station for sending data to the terminal and beam index information used for sending data to the terminal.

It should be noted that, a process in which the terminal sends the measurement report according to the measurement result of the RRM measurement after the terminal performs the RRM measurement according to the beam corresponding to the first beam index information included in the at least one piece of beam index information may be shown in the embodiment shown in FIG. 1, and details are not described herein again. The first beam index information in this embodiment of the present invention and the second beam index information in the embodiment shown in FIG. 1 have a same function.

Optionally, the processor 501 is further configured to control the transmitter 503 to send, to the terminal, sounding reference signal configuration information of at least one cell on the at least one millimeter-wave band, where the sounding reference signal configuration information is used to instruct the terminal to send a sounding reference signal on the beam corresponding to the at least one piece of beam index information.

Optionally, the processor 501 is further configured to:

control the receiver 504 to receive a random access preamble that is sent by the terminal on a beam corresponding to second beam index information used as a physical random access channel resource; and
control the transmitter 503 to send a random access response message on the beam corresponding to the second beam index information.

The second beam index information in this embodiment of the present invention and the fifth beam index information in the embodiment shown in FIG. 1 have a same function.

Optionally, the random access response message includes third beam guide information.

The processor 501 is further configured to:

control the receiver 504 to receive a random access message on a beam corresponding to the third beam index information, where the random access message includes an identifier of the terminal; and control the transmitter 503 to send a contention resolution message on the beam corresponding to the third beam index, where the contention resolution message includes the identifier of the terminal.

The identifier of the terminal is a cell radio network temporary identifier C-RNTI or a System Architecture Evolution-temporary mobile station identifier S-TMSI of the terminal.

The third beam index information in this embodiment of the present invention and the sixth beam index information in the embodiment shown in FIG. 1 have a same function.

The terminal may perform random access to the millimeter-wave base station according to the second beam index information in the at least one piece of beam index information. The random access may be a non-contention-based random access process, or may be a contention-based random access process. For a specific random access method, reference may be made to descriptions in the embodiment corresponding to FIG. 1, and details are not described herein again.

Optionally, the processor 501 is further configured to:

control the receiver 504 to receive uplink measurement configuration information sent by a master base station or the base station controller, where the uplink measurement configuration information includes fourth beam index information;
measure, on a beam corresponding to the fourth beam index information, power of the sounding reference signal sent by the terminal; and
control the transmitter 503 to send, to the base station controller, a measurement result that includes the power that is of the sounding reference signal and that is obtained by means of measurement, where the measurement result is used to instruct the base station controller to, when the power of the sounding reference signal is greater than a preset power threshold, instruct the millimeter-wave base station to prepare to communicate with the terminal.

The master base station or the base station controller may specify that specific millimeter-wave base stations measure power of sounding reference signals of specific terminals. Specifically, the master base station or the base station controller instructs the terminal to send the SRS on the beam corresponding to the at least one piece of beam index information, and instructs the millimeter-wave base station to measure, on a beam corresponding to particular beam index information (the fourth beam index information), the sounding reference signal of the terminal.

The fourth beam index information in this embodiment of the present invention and the seventh beam index information in the embodiment shown in FIG. 1 have a same function.

After measuring the power of the sounding reference signal sent by the terminal, the millimeter-wave base station sends the measurement result of the sounding reference signal to the base station controller. Before the millimeter-wave base station communicates with the terminal, the base station controller determines, according to the power of the sounding reference signal sent by the terminal, whether to serve the terminal. Alternatively, in a process in which the millimeter-wave base station communicates with the terminal, the base station controller determines, according to the power of the sounding reference signal sent by the terminal, whether to continue to serve the terminal. For example, if the power of the sounding reference signal sent by the terminal is less than a threshold, it indicates that the terminal is unsuitable for communicating with the millimeter-wave base station any longer, and the base station controller may send a detection report to the master base station, to request the master base station to update a set of millimeter-wave base stations that serve the terminal. If the power of the sounding reference signal sent by the terminal is not less than the threshold, the detection report is not sent.

In conclusion, the base station provided in this embodiment of the present invention communicates with a terminal by using a beam corresponding to at least one piece of beam index information corresponding to at least one millimeter-wave band, so as to resolve a problem in the prior art that available bandwidth is relatively small when a terminal performs cellular communication, extend a frequency range of terminal communication, increase a data transmission rate of the terminal, reduce signal fading and distortion during millimeter-wave communication between the terminal and a millimeter-wave base station, and reduce interference between users on a same channel.

Referring to FIG. 6, FIG. 6 shows a block diagram of a base station according to an embodiment of the present invention. The base station may be the millimeter-wave base station in the embodiment shown in FIG. 1. The base station may include:

a configuration module 601, configured to configure, for a terminal, at least one piece of beam index information corresponding to at least one millimeter-wave band, where the at least one piece of beam index information is used to instruct the terminal to communicate, by using a beam corresponding to the at least one piece of beam index information, with a millimeter-wave base station corresponding to the at least one millimeter-wave band.

Optionally, the base station further includes a sending module 602, configured to send a radio resource reconfiguration message or a broadcast message that includes the at least one piece of beam index information to the terminal; or
the base station further includes a negotiation module 603, configured to negotiate with the terminal to determine the at least one piece of beam index information.

Optionally, the base station further includes:

a receiving module 604, configured to receive a measurement report sent by the terminal, where the measurement report is a measurement report that is sent by the terminal according to a measurement result of RRM measurement after the terminal performs the RRM measurement according to a beam corresponding to first beam index information included in the at least one piece of beam index information.

The sending module 602 is configured to send the measurement report to a base station controller, where the measurement report is used to instruct the base station controller to determine the millimeter-wave base station for sending data to the terminal and beam index information used for sending data to the terminal.

Optionally, the sending module 602 is further configured to send, to the terminal, sounding reference signal configuration information of at least one cell on the at least one millimeter-wave band, where the sounding reference signal configuration information is used to instruct the terminal to send a sounding reference signal on the beam corresponding to the at least one piece of beam index information.

Optionally, the receiving module 604 is further configured to receive a random access preamble that is sent by the terminal on a beam corresponding to second beam index information used as a physical random access channel resource.

The sending module 602 is further configured to send a random access response message on the beam corresponding to the second beam index information.

Optionally, the random access response message includes third beam guide information.

The receiving module 604 is further configured to receive a random access message on a beam corresponding to the third beam index information, where the random access message includes an identifier of the terminal.

The sending module 602 is further configured to send a contention resolution message on the beam corresponding to the third beam index, where the contention resolution message includes the identifier of the terminal.

The identifier of the terminal is a cell radio network temporary identifier C-RNTI or a System Architecture Evolution-temporary mobile station identifier S-TMSI of the terminal.

Optionally, the receiving module 604 is further configured to receive uplink measurement configuration information sent by a master base station or the base station controller, where the uplink measurement configuration information includes fourth beam index information.

The base station further includes a measurement module 605, configured to measure, on a beam corresponding to the fourth beam index information, power of the sounding reference signal sent by the terminal.

The sending module 602 is further configured to send a measurement result that includes the power that is of the sounding reference signal and that is obtained by means of measurement, where the measurement result is used to instruct the base station controller to, when the power of the sounding reference signal is greater than a preset power threshold, instruct the millimeter-wave base station to prepare to communicate with the terminal.

In conclusion, the base station provided in this embodiment of the present invention communicates with a terminal by using a beam corresponding to at least one piece of beam index information corresponding to at least one millimeter-wave band, so as to resolve a problem in the prior art that available bandwidth is relatively small when a terminal performs cellular communication, extend a frequency range of terminal communication, increase a data transmission rate of the terminal, reduce signal fading and distortion during millimeter-wave communication between the terminal and a millimeter-wave base station, and reduce interference between users on a same channel.

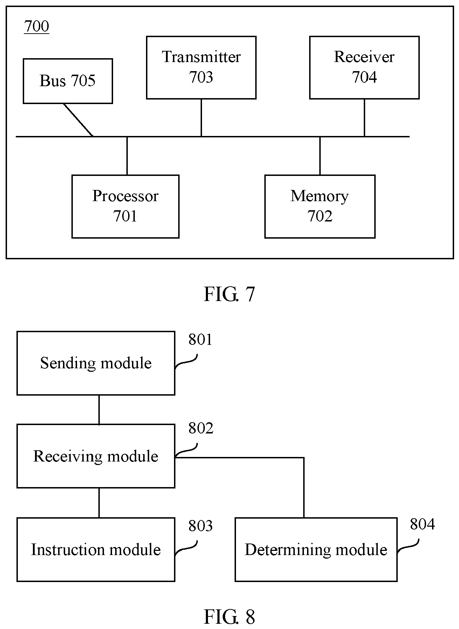

Referring to FIG. 7, FIG. 7 shows a block diagram of a base station controller according to an embodiment of the present invention. The base station controller may be used to control at least one millimeter-wave base station. The base station controller 700 includes:

a bus 705, and a processor 701, a memory 702, a transmitter 703, and a receiver 704 that are connected to the bus. The memory 702 is configured to store several instructions, and the several instructions are configured to be executed by the processor 701.

The processor 701 is configured to:

control the transmitter 703 to send uplink measurement configuration information to a millimeter-wave base station, where the uplink measurement configuration information includes beam index information, and the uplink measurement configuration information is used to instruct the millimeter-wave base station to measure, on a beam corresponding to the beam index information, power of a sounding reference signal sent by the terminal;
control the receiver 704 to receive a measurement result that is sent by the millimeter-wave base station and that includes the power that is of the sounding reference signal and that is obtained by means of measurement; and

when the power of the sounding reference signal is greater than a preset power threshold, instruct the millimeter-wave base station to prepare to communicate with the terminal.

The terminal communicates, by using at least one piece of beam index information corresponding to at least one millimeter-wave band, millimeter-wave base stations corresponding to the at least one millimeter-wave band.

A master base station or the base station controller may specify that specific millimeter-wave base stations measure power of sounding reference signals of specific terminals. Specifically, the master base station or the base station controller instructs the terminal to send the SRS on the beam corresponding to the at least one piece of beam index information, and instructs the millimeter-wave base station to measure, on a beam corresponding to particular beam index information, the sounding reference signal of the terminal. The beam index information in this embodiment of the present invention and the seventh beam index information in the embodiment shown in FIG. 1 have a same function.

After measuring the power of the sounding reference signal sent by the terminal, the millimeter-wave base station sends the measurement result of the sounding reference signal to the base station controller. Before the millimeter-wave base station communicates with the terminal, the base station controller determines, according to the power of the sounding reference signal sent by the terminal, whether to serve the terminal. Alternatively, in a process in which the millimeter-wave base station communicates with the terminal, the base station controller determines, according to the power of the sounding reference signal sent by the terminal, whether to continue to serve the terminal. For example, if the power of the sounding reference signal sent by the terminal is less than a threshold, it indicates that the terminal is unsuitable for communicating with the millimeter-wave base station any longer, and the base station controller may send a detection report to the master base station, to request the master base station to update a set of millimeter-wave base stations that serve the terminal. If the power of the sounding reference signal sent by the terminal is not less than the threshold, the detection report is not sent.

Optionally, the processor 701 is further configured to:

control the receiver 704 to receive a measurement report sent by the millimeter-wave base station, where the measurement report is a measurement report that is sent by the terminal according to a measurement result of RRM measurement after the terminal performs the RRM measurement according to a beam corresponding to first beam index information included in the beam index information; and

determine, according to the measurement report, the millimeter-wave base station for sending data to the terminal and beam index information used for sending data to the terminal.

In conclusion, the base station controller provided in this embodiment of the present invention instructs a millimeter-wave base station to measure, on a beam corresponding to particular beam index information, a sounding reference signal of the terminal, so that the terminal performs communication on a beam corresponding to at least one piece of beam index information corresponding to at least one millimeter-wave band, so as to resolve a problem in the prior art that available bandwidth is relatively small when a terminal performs cellular communication, extend a frequency range of terminal communication, increase a data transmission rate of the terminal, reduce signal fading and distortion during millimeter-wave communication between the terminal and a millimeter-wave base station, and reduce interference between users on a same channel.

Referring to FIG. 8, FIG. 8 shows a block diagram of a base station controller according to an embodiment of the present invention. The base station controller may be the base station controller in the embodiment shown in FIG. 1. The base station controller may include:

a sending module 801, configured to send uplink measurement configuration information to a millimeter-wave base station, where the uplink measurement configuration information includes beam index information, and the uplink measurement configuration information is used to instruct the millimeter-wave base station to measure, on a beam corresponding to the beam index information, power of a sounding reference signal sent by the terminal;

a receiving module 802, configured to receive a measurement result that is sent by the millimeter-wave base station and that includes the power that is of the sounding reference signal and that is obtained by means of measurement; and

an instruction module 803, configured to: when the power of the sounding reference signal is greater than a preset power threshold, instruct the millimeter-wave base station to prepare to communicate with the terminal.

The terminal communicates, by using at least one piece of beam index information corresponding to at least one millimeter-wave band, millimeter-wave base stations corresponding to the at least one millimeter-wave band.

The receiving module 802 is further configured to receive a measurement report sent by the millimeter-wave base station, where the measurement report is a measurement report that is sent by the terminal according to a measurement result of RRM measurement after the terminal performs the RRM measurement according to a beam corresponding to first beam index information included in the beam index information.

The base station controller further includes:

a determining module 804, configured to determine, according to the measurement report, the millimeter-wave base station for sending data to the terminal and beam index information used for sending data to the terminal.

In conclusion, the base station controller provided in this embodiment of the present invention instructs a millimeter-wave base station to measure, on a beam corresponding to particular beam index information, a sounding reference signal of the terminal, so that the terminal performs communication on a beam corresponding to at least one piece of beam index information corresponding to at least one millimeter-wave band, so as to resolve a problem in the prior art that available bandwidth is relatively small when a terminal performs cellular communication, extend a frequency range of terminal communication, increase a data transmission rate of the terminal, reduce signal fading and distortion during millimeter-wave communication between the terminal and a millimeter-wave base station, and reduce interference between users on a same channel.

It should be noted that, for the master base stations, the millimeter-wave base stations, and the base station controllers that are shown in the foregoing embodiments of the present invention, the base station controller may be separately disposed outside the master base station and the millimeter-wave base station, or the base station controller may be disposed in a master base station or a millimeter-wave base station. A specific manner of disposing the base station controller is not specifically limited in the embodiments of the present invention.

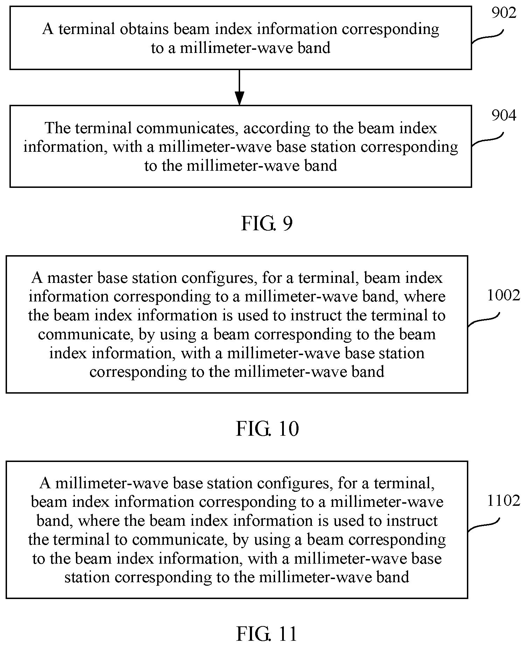

Referring to FIG. 9, FIG. 9 shows a method flowchart of a millimeter-wave cellular communication method according to an embodiment of the present invention. A terminal corresponding to the millimeter-wave cellular communication method may be the terminal in the embodiment shown in FIG. 1. The terminal in the embodiment shown in FIG. 1 may perform the following steps of the method:

902. The terminal obtains beam index information corresponding to a millimeter-wave band.

904. The terminal communicates, according to the beam index information, with a millimeter-wave base station corresponding to the millimeter-wave band.

Before obtaining the beam index information corresponding to the millimeter-wave band, the terminal may receive a radio resource reconfiguration message or a broadcast message sent by a master base station or the millimeter-wave base station, and obtain the beam index information that is included in the radio resource reconfiguration message or the broadcast message and is corresponding to the millimeter-wave band.

Alternatively, before obtaining the beam index information corresponding to the millimeter-wave band, the terminal may negotiate with a master base station or the millimeter-wave base station to agree on the beam index information. The master base station and the millimeter-wave base station are a same base station or different base stations.

Each piece of the beam index information is corresponding to information about one precoding codebook or information about one group of antenna weights, or each of the beam index is corresponding to information about multiple precoding codebooks or information about multiple groups of antenna weights, and each precoding codebook or information about each group of antenna weights uniquely determines a beam.

The beam index information is further associated with beam characteristic information. The master base station sends particular characteristic information of different beams on the beams, so that UE identifies different beams according to different characteristic information. The master base station uses different reference signal sequences on different beams, or broadcasts beam index information of different beams on the beams. The UE may uniquely determine a particular beam according to the beam index information and characteristic information of the beams. The beam index information may also be used as a virtual cell identity, that is, a cell is further divided into different sectors or sub-sectors according to multiple relatively wide beams. Functions and usage methods of beam index information in following embodiments of the present invention are the same as those described in this embodiment, and details are not described again in the following.

In addition, each piece of the beam index information is corresponding to a coverage area of one sector or one cell, or each piece of the beam index information is corresponding to a part of a coverage area of one sector or one cell. The beam index information is one-level index information or N-level index information, N is an integer, and $N \geq 2$. When the beam index information is the N-level index information, the $i^{th}$ level index information in the beam index information is associated with the $(i+1)^{th}$ level index information, a coverage area of a beam corresponding to the $(i+1)^{th}$ level index information is not greater than a coverage area of a beam corresponding to the $i^{th}$ level index information, i is an integer, and $2 \leq i \leq N$.

When beam index information selected or determined by the UE is the $i^{th}$ level index information, the UE may communicate with the millimeter-wave base station by using the beam represented by the $i^{th}$ level index information, or may communicate with the millimeter-wave base station by using the beam corresponding to the $(i+1)^{th}$ level index information.

In this embodiment of the present invention, the millimeter-wave band is configured for the terminal as a service band, and the terminal communicates with the millimeter-wave base station on the configured millimeter-wave band, so as to extend a frequency range of terminal communication and increase a data transmission rate of the terminal. Steps in which the master base station configures, for the terminal, a cell corresponding to the millimeter-wave band, and the terminal communicates with the millimeter-wave base station may be as follows:

(1) User equipment performs downlink radio resource management measurement on the millimeter-wave band to measure signal received power of a cell reference signal or a channel quality indicator reference signal of the millimeter-wave band, and sends a first measurement report to the master base station or the millimeter-wave base station. The master base station determines, according to the first measurement report of the UE, that the UE enters a coverage area of the millimeter-wave base station and that one or more cells corresponding to a millimeter-wave frequency can be configured for the UE as one or more secondary cells.

RRM measurement herein refers to measurement used for mobility management, and is a measurement method filtered by a radio resource control layer. For example, a filter method used in an LTE system is $F_n = (1-a) \cdot F_{n-1} + a \cdot M_n$, where $F_n$ is a latest filtered measurement result and is used to evaluate a criterion for triggering a measurement report, $F_{n-1}$ is a filtered measurement result that is calculated at a previous time, $M_n$ is a latest measurement result at a physical layer, and a is a coefficient determined according to different measurement requirements.

Before this, the master base station or the millimeter-wave base station configures, for the UE, measurement of one or more millimeter-wave bands. Configuration information includes at least configuration information such as a frequency range of a millimeter-wave band, a CSI-RS port number, a subframe, and a scrambling code, so that the UE performs measurement and reporting according to the configuration information.

Alternatively, the master base station or the millimeter-wave base station may determine, according to a first measurement report of the UE and/or UE location information in an existing band with a relatively low frequency, such as an LTE band, that the UE enters the coverage area of the millimeter-wave base station. The existing band with a relatively low frequency is mainly provided by the master base station or the millimeter-wave base station, and the latter case requires that the millimeter-wave base station supports both the existing band with a relatively low frequency and the millimeter-wave band.

(2) The master base station sends a request message to the millimeter-wave base station or a base station controller, to request to configure the millimeter-wave base station for the UE as an SCell.

The master base station adds, to the request message, at least a cell radio network temporary identifier of the UE, radio bearer configuration information of the UE, radio resource configuration information of the master base station, identification information of one or more millimeter-wave base stations, and the like.

The one or more millimeter-wave base stations may have a same frequency range, and frequencies provided by the multiple millimeter-wave base stations may form a same SCell. In this case, the frequencies provided by the multiple millimeter-wave base stations have same physical cell identifiers and same evolved cell global identifications. The multiple millimeter-wave base stations send same primary synchronization signals and same secondary synchronization signals. Alternatively, the multiple millimeter-wave base stations may send different PSSs and different SSSs to distinguish the different millimeter-wave base stations. The frequencies provided by the multiple millimeter-wave base stations may have different CSI-RS port configurations, so that the different millimeter-wave base stations can also be distinguished according to this. Alternatively, the frequencies provided by the multiple millimeter-wave base stations have same CSI-RS port configurations, and the millimeter-wave base stations are not distinguished.

The one or more millimeter-wave base stations may have different frequency ranges, and the frequencies provided by the multiple millimeter-wave base stations are separately used as different SCells. The frequencies provided by the multiple millimeter-wave base stations have different physical cell identifiers and different evolved cell global identifications, and the multiple millimeter-wave base stations send different PSSs and different SSSs.

(3) The millimeter-wave base station or the base station controller performs admission control, agrees to configure, for the UE, a cell corresponding to at least one millimeter-wave band as an SCell, and sends a response message to the master base station.

The response message may carry the following information: sounding reference signal configuration information of the UE and a C-RNTI allocated to the UE. On the other hand, the SRS configuration information may also be uniformly configured by the master base station, so that the millimeter-wave base station does not provide the SRS configuration information. The millimeter-wave base station may not provide C-RNTI configuration information either, so that the UE uses, in both a PCell and the SCell, a C-RNTI allocated by the PCell.

The response message further carries at least the following information: a frequency range of a millimeter wave, common radio resource configuration information, and dedicated radio resource configuration information.

The millimeter-wave base station or the base station controller sends a notification message to all millimeter-wave base stations in a cluster, so that all the millimeter-wave base stations in the cluster prepare to measure an SRS of the UE, and prepare a resource according to measurement performed by all the millimeter-wave base stations or the notification message of the base station controller, to serve the UE.

(4) The master base station or the millimeter-wave base station sends a radio resource reconfiguration message to the UE, and configures an SCell for the UE.

The radio resource reconfiguration message carries at least radio resource configuration information related to the millimeter-wave base station, and may further carry radio resource configuration information of the master base station.

(5) The UE performs radio resource configuration, and sends a radio resource reconfiguration completion message to the master base station.
(6) The UE performs a random access process with one or more millimeter-wave base stations, so as to implement uplink synchronization with the one or more millimeter-wave base stations.
(7) The millimeter-wave base station or the base station controller determines, according to measurement of the SRS of the UE, the one or more millimeter-wave base stations that communicate with the UE within a specified time.

Optionally, the millimeter-wave base station or the base station controller may notify the master base station of identification information of the millimeter-wave base station.

(8) The one or more millimeter-wave base stations allocate resources to the UE, and perform data communication, including downlink and/or uplink communication, with the UE.
(9) The millimeter-wave base station measures the SRS of the UE to determine whether to continue to serve the UE.

Due to movement of the UE, the one or more millimeter-wave base stations may be unsuitable for data communication with the UE any longer. For example, when measured signal strength of the SRS of the UE is less than a specified threshold, the one or more millimeter-wave base stations determine that the one or more millimeter-wave base stations need to stop serving the UE.

(10) The millimeter-wave base station or the base station controller sends, to the master base station, a first measurement report and/or a message that determines whether to continue to serve the UE.

A millimeter-wave base station determined by the millimeter-wave base station or the base station controller to continue to serve the UE does not need to send the message to the master base station, and steps 10 to 13 are not needed.

(11) The master base station determines to update a set of millimeter-wave base stations that serve the UE.
(12) The master base station sends, to the millimeter-wave base station or the base station controller, identification information of a millimeter-wave base station that needs to serve the UE.
(13) The millimeter-wave base station or the base station controller dynamically determines, according to a measurement result of the SRS of the UE, that one or more millimeter-wave base stations allocate resources to the UE to perform downlink and/or uplink communication.

A millimeter-wave band signal has relatively large free space attenuation, and factors such as air absorption, and absorption and scattering of rain, fogs, buildings, and other objects also have relatively great impact on the millimeter-wave band signal. Therefore, in this embodiment of the present invention, particular beam index information is set for the terminal, and the terminal performs communication on a beam corresponding to the particular beam index information, so as to reduce signal fading and distortion of a radio signal that are caused in a transmission process by factors such as a space loss and a multipath effect when the terminal and the millimeter-wave base station perform millimeter-wave communication, and reduce interference between users on a same channel.
The terminal may perform random access, RRM measurement, sending of a sounding reference signal SRS, and the like by using beam index information corresponding to a specified millimeter-wave band. For details, refer to the following steps.
The terminal selects beams corresponding to some or all beam index information in the beam index information, to communicate with the millimeter-wave base station; or

the terminal may determine first beam index information that is in the beam index information and is specified by the master base station or the millimeter-wave base station, and communicate with the millimeter-wave base station according to a beam corresponding to the first beam index information.
There may be one or more pieces of the beam index information. The terminal may select the beam corresponding to some or all of the beam index information to perform data receiving and sending. Alternatively, the master base station or the millimeter-wave base station specifies one or more pieces of beam index information in the beam index information, and the terminal performs data receiving and sending according to the beam index information specified by the master base station or the millimeter-wave base station.

Optionally, the terminal performs downlink radio resource management measurement according to the beam index information.

The beam index information may include second beam index information used for RRM measurement. The terminal performs RRM measurement according to a beam corresponding to the second beam index information, to obtain a first measurement result, where the first measurement result includes reference signal received power RSRP and/or reference signal received quality RSRQ.

In a millimeter-wave cell, the UE may move quickly between different beams. Therefore, a requirement on RRM measurement used for beam management may be stricter than that in an existing LTE system, for example, evaluation is performed every tens of milliseconds to determine whether a measurement report criterion is met. Further, in a broad sense, RRM measurement used for millimeter-wave cell beam management may also refer to measurement performed in a beam training manner. For example, the master base station and the UE respectively send and receive a measurement signal on multiple beams in a cell range, to find a best matched beam pair. When communication is performed between such a pair of sending beam and receiving beam, receiving efficiency is the highest and transmitted data is the most reliable. Measurement in such a case may be filtered by the RRC layer, and a measurement requirement is stricter; or measurement in such a case does not need to be filtered by the RRC layer, and a current measurement result is directly used. In this way, a better transmission effect may be achieved between the master base station and the UE by using smaller transmit power. Meanings of RRM measurement for millimeter-wave cell beam management in the following embodiments of the present invention are the same as those described in this embodiment, and details are not described again in the following.

The terminal sends a first measurement report to the master base station according to the first measurement result. The first measurement report includes at least one of the following information: at least one piece of beam index information with highest RSRP and/or highest RSRQ, an RSRP measurement result and/or an RSRQ measurement result on a beam corresponding to the at least one piece of beam index information with highest RSRP and/or highest RSRQ, frequency information in which the at least one piece of beam index information with highest RSRP and/or highest RSRQ is located, serving cell information associated with the at least one piece of beam index information with highest RSRP and/or highest RSRQ, or neighboring cell information associated with the at least one piece of beam index information with highest RSRP and/or highest RSRQ. The serving cell information or the neighboring cell information is indicated by using a physical cell identifier PCI and/or a cell global identification CGI.

RRM measurement is performed in multiple preconfigured fixed beam directions/widths. The UE reports RSRP/RSRQ measured on one or more beams with best signal quality, and corresponding beam index information is included during the reporting, so that the master base station performs scheduling according to the first measurement report.

Alternatively, the UE may adaptively choose to perform measurement on multiple beams, and choose to report RSRP/RSRQ information on one or more beams with best signal quality. Beam index information, for example, information about multiple antenna weights, that is selected by the UE is included during the reporting.

Further, the beam index information further includes third beam index information used for candidate RRM measurement. When the RSRP included in the first measurement result is less than a preconfigured threshold and/or when the RSRQ included in the first measurement result is less than a preconfigured threshold, the terminal starts to perform RRM measurement according to a beam corresponding to the third beam index information.

If RSRP/RSRQ that is obtained by means of measurement by the UE on a beam corresponding to a piece of beam index information is greater than a preset threshold, the UE may not measure a signal on another beam, or may measure a signal on another beam by using a longer period, so as to select, from a same cell, a better beam range that is relatively wide as a data communication range.

Alternatively, the UE may select multiple relatively wide beam ranges that have both relatively good signal quality and relatively good space isolation to perform measurement. Measurement periods may be the same, or may be different to support concurrent working of multiple beams.

Further, the beam index information further includes fourth beam index information used for intra-frequency measurement. The terminal obtains measurement gap period information associated with the fourth beam index information. The terminal performs, in a measurement gap indicated by the measurement gap period information, intra-frequency measurement on the millimeter-wave band according to a beam corresponding to the fourth beam index information.

When the UE needs to be adjusted to a direction angle corresponding to another beam to measure an SCH, a CRS, a CSI-RS, or the like of a neighboring cell, even for intra-frequency measurement, a serving cell cannot schedule the UE in multiple beam directions, unless the UE has more antennas and radio frequency links. Therefore, the master base station or the base station controller may preconfigure measurement gap period information for the terminal, and associate the measurement gap period information with beam index information used for intra-frequency measurement. Intra-frequency measurement is performed only in a measurement gap indicated by the measurement gap period information.

In this embodiment, a trigger condition may further be set for an event of sending the first measurement report. For example, when RSRP on a beam corresponding to a piece of beam index information is less than a preset value, and RSRP on a beam corresponding to another piece of beam index information is still higher than the preset value, the first measurement report is triggered.

With reference to the RRM measurement method shown in this step, when communicating with the millimeter-wave base station, the terminal may perform communication on the beam corresponding to the beam index information with highest RSRP and/or highest RSRQ.

Optionally, the terminal performs random access according to the beam index information.

The terminal determines, from the beam index information, fifth beam index information used as a physical random access channel resource, and performs random access according to a beam corresponding to the fifth beam index information.

When determining the fifth beam index information, the terminal may select a piece of beam index information from the beam index information as the fifth beam index information, or the terminal may determine, as the fifth beam index information, beam index information that is in the beam index information and that is specified by the master base station or the millimeter-wave base station as the physical random access channel resource.

The random access process may be contention-based random access, or may be non-contention-based random access. In a non-contention-based random access process, the master base station or the base station controller allocates, to the terminal, a millimeter-wave base station for access and beam index information used for access, that is, the fifth beam index information. The terminal sends a random access preamble (preamble, that is, msg1) on the beam corresponding to the fifth beam index information. After a millimeter-wave base station in a direction of the beam corresponding to the fifth beam index information receives the msg1, if the millimeter-wave base station is a base station, for random access, allocated by the master base station or the base station controller to the terminal, the millimeter-wave base station sends a random access response message (msg2) on the beam corresponding to the fifth beam index information. The terminal receives the random access response message on the beam corresponding to the fifth beam index information. The random access response message may include information for at least one UE. These UEs send the msg1 by using a same time-frequency domain resource. The UE determines, according to an identifier such as a random access-radio network temporary identifier on a physical downlink control channel, whether the msg2 includes the information for the UE. When the RA-RNTI is consistent with the time-frequency resource used when the UE sends the random access preamble, the UE determines that the msg2 may include the information for the UE. Further, the UE finally determines, according to whether a preamble included in the msg2 is consistent with the preamble used when the UE sends the msg1, whether the msg2 includes the information for the UE. When the terminal receives the msg2 only on the beam corresponding to the fifth beam index information, a calculation formula of the RA-RNTI may use a calculation method in prior-art LTE. The calculation formula is as follows:

$$RA\text{-}RNTI = 1 + t\_id + 10 * f\_id;$$

where

t_id refers to a subframe in which a physical random access channel resource used when the UE sends the msg1 is located, and f_id refers to an index of the PRACH resource in the subframe. For example, for a time division duplex mode, multiple PRACH channel resources may be configured in different frequency ranges for a subframe, and a frequency range of each PRACH channel is corresponding to a piece of index information of a frequency domain.

Alternatively, the terminal may receive a random access response message msg2 on the beam corresponding to the beam index information. In this case, the msg2 may include information about UE that sends the msg1 on beams corresponding to different beam indexes. A calculation formula of the RA-RNTI may include beam index information, so as to indicate a beam that is corresponding to a beam index and on which the UE sends the msg1 message. Therefore, the UE can more accurately determine whether the msg2 includes the information about the UE. The calculation formula of the RA-RNTI is as follows:

$$RA\text{-}RNTI = 1 + t\_id + 10 * f\_id + beam\_idx;$$

where beam_idx refers to beam index information used when the UE sends the msg1.

At this point, non-contention-based random access is completed.

Further, the random access response message includes sixth beam guide information. The terminal sends a random access message on a beam corresponding to the sixth beam index information, and the random access message includes an identifier of the terminal. The terminal receives a contention resolution message on the beam corresponding to the sixth beam index, or the terminal receives a contention resolution message on the beam corresponding to the beam index information, and the contention resolution message includes the identifier of the terminal. The identifier of the terminal is a cell radio network temporary identifier C-RNTI or a System Architecture Evolution-temporary mobile station identifier S-TMSI of the terminal.

In a contention-based random access process, the master base station or the base station controller allocates, to the terminal, only the beam index information used for access, that is, the fifth beam index information, but does not specify, for the terminal, a millimeter-wave base station for access. The terminal sends the random access preamble (msg1) on the beam corresponding to the fifth beam index information. After receiving the msg1, the millimeter-wave base station in the direction of the beam corresponding to the fifth beam index information sends the random access response message (msg2) on the beam corresponding to the fifth beam index information. The terminal receives the msg2 on the beam corresponding to the fifth beam index information, and the UE uses the formula RA-RNTI=1+t_id+10*f_id to determine whether the msg2 includes the information for the UE. Alternatively, the terminal may receive the msg2 on the beam corresponding to the beam index information, and the UE uses the formula RA-RNTI=1+t_id+10*f_id+beam_idx to determine whether the msg2 includes the information for the UE. The msg2 includes the sixth beam guide information, and the terminal sends the random access message (msg3) according to the sixth beam index information. The msg3 includes the identifier of the terminal, and the terminal receives the msg3 on the beam corresponding to the sixth beam index information. If the terminal is allowed to access, an msg4 that includes the identifier of the terminal is sent on the same beam. After receiving the msg4 and detecting that the msg4 includes the identifier of the terminal, the terminal confirms that the access is successful. For random access processes in subsequent embodiments, methods for determining, by the UE, whether the msg2 includes the information for the UE are the same as those in this embodiment, and details are not described in the present invention.

In another access method, the master base station or the base station controller specifies beam index information for random access preambles. The UE may choose, according to the measurement result of RRM measurement in the foregoing step 906, to send, in a beam direction, the msg1 to the millimeter-wave base station, for example, send the msg1 on a beam that is with a best signal in an RRM measurement result reported at a previous time and is corresponding to a piece of beam index information. The millimeter-wave base station detects a random access preamble in the msg1 in an omnidirectional receiving manner.

The millimeter-wave base station sends the msg2 in a direction in which the msg1 is received, and the msg2 includes information about multiple UEs in the direction. Because sending beams generated by the different UEs in the direction may be different, the millimeter-wave base station adapts to beams of the multiple UEs to generate new downlink beams, so that all UEs that use a same time-frequency domain resource can receive the msg2. In addition, because the UE may also move to another direction, the msg2 needs to be sent in different directions, and content in the msg2 is different. For example, included random access preambles are different due to different UEs. The UE receives the msg2 only in a direction in which the msg1 is sent.

In addition, in the contention-based random access process, the UE may also simultaneously use multiple beams to send the msg1. Therefore, a probability that the master base station detects the msg1 can be increased.

Optionally, the terminal sends a sounding reference signal according to the beam index information.

Specifically, the terminal receives sounding reference signal configuration information sent by the master base station, and the terminal sends, according to the sounding reference signal configuration information, the sounding reference signal on the beam corresponding to the beam index information.

The master base station or a millimeter-wave base station controller instructs specific millimeter-wave base stations to measure SRSs of specific UEs. The UEs send SRSs according to beams corresponding to multiple pieces of preconfigured beam index information. The millimeter-wave base station measures an SRS of specified UE to determine whether the millimeter-wave base station is suitable for serving the UE. If yes, the millimeter-wave base station notifies the base station controller or another millimeter-wave base station of information about a time-frequency-space domain resource that is to be allocated by the millimeter-wave base station to the UE, so as to avoid interference.

After measuring power of the sounding reference signal sent by the terminal, the millimeter-wave base station sends a measurement result of the sounding reference signal to the base station controller. Before the millimeter-wave base station communicates with the terminal, the base station controller determines, according to the power of the sounding reference signal sent by the terminal, whether to serve the terminal. Alternatively, in a process in which the millimeter-wave base station communicates with the terminal, the base station controller determines, according to the power of the sounding reference signal sent by the terminal, whether to continue to serve the terminal. For example, if the power of the sounding reference signal sent by the terminal is less than a threshold, it indicates that the terminal is unsuitable for communicating with the millimeter-wave base station any longer, and the base station controller may send a detection report to the master base station, to request the master base station to update a set of millimeter-wave base stations that serve the terminal. If the power of the sounding reference signal sent by the terminal is not less than the threshold, the detection report is not sent.

When the base station updates the set of millimeter-wave base stations that serve the UE, an added millimeter-wave base station (a target mmB) notifies an mmB that currently serves the terminal of configuration information of a cell corresponding to the added millimeter-wave base station, such as a broadcast control channel, an SSH, a CRS, a CSI-RS, a demodulation reference signal, a physical random access channel, and beam configuration information included in measurement configuration. The millimeter-wave base station that currently serves the terminal sends the configuration information to the UE, so that the UE quickly accesses the target millimeter-wave base station.

In conclusion, according to the method provided in this embodiment of the present invention, a terminal obtains beam index information corresponding to a millimeter-wave band, and communicates, by using a beam corresponding to the beam index information, with a millimeter-wave base station corresponding to the millimeter-wave band, so as to resolve a problem in the prior art that available bandwidth is relatively small when a terminal performs cellular communication, extend a frequency range of terminal communication, and increase a data transmission rate of the terminal.

In addition, according to the method provided in this embodiment of the present invention, the terminal performs communication, RRM measurement, and random access on a beam corresponding to specified beam index information, so as to reduce signal fading and distortion during millimeter-wave communication between a terminal and a millimeter-wave base station, and reduce interference between users on a same channel.

Referring to FIG. 10, FIG. 10 shows a method flowchart of a millimeter-wave cellular communication method according to an embodiment of the present invention. A master base station corresponding to the millimeter-wave communication method may be the base station in the embodiment shown in FIG. 3. The base station in the embodiment shown in FIG. 3 may perform the following step of the method:

Step 1002: The master base station configures, for a terminal, beam index information corresponding to a millimeter-wave band, where the beam index information is used to instruct the terminal to communicate, by using a beam corresponding to the beam index information, with a millimeter-wave base station corresponding to the millimeter-wave band.

Specifically, the master base station may send a radio resource reconfiguration message that includes the beam index information to the terminal, or the master base station may negotiate with the terminal to determine the beam index information.

Optionally, the master base station receives a measurement report sent by the terminal.

The measurement report is a report that is sent by the terminal according to a measurement result of RRM measurement after the terminal performs the RRM measurement according to a beam corresponding to first beam index information included in the beam index information.

For a specific process of performing, by the terminal, the RRM measurement according to the beam corresponding to the first beam index information, reference may be made to descriptions in the embodiment corresponding to FIG. 9, and details are not described herein again. The first beam index information in this embodiment of the present invention and the second beam index information in the embodiment corresponding to FIG. 9 have a same function.

Optionally, the master base station performs data scheduling according to the measurement report.

Specifically, the master base station may determine, according to the measurement report, the millimeter-wave base station for sending data to the terminal and beam index information used for sending data to the terminal.

Optionally, the master base station sends, to the terminal, sounding reference signal configuration information of a cell on the millimeter-wave band, and sends uplink measurement configuration information to the millimeter-wave base station.

The master base station sends the sounding reference signal configuration information to the terminal, where the sounding reference signal configuration information is used to instruct the terminal to send a sounding reference signal on the beam corresponding to the beam index information.

In addition, the master base station further sends the uplink measurement configuration information to the millimeter-wave base station, where the uplink measurement configuration information includes second beam index information, and the uplink measurement configuration information is used to instruct the millimeter-wave base station to measure, on a beam corresponding to the second beam index information, power of the sounding reference signal sent by the terminal.

The master base station or a base station controller may specify that specific millimeter-wave base stations measure power of sounding reference signals of specific terminals. Specifically, the master base station or the base station controller instructs the terminal to send the SRS on the beam corresponding to the beam index information, and instructs the millimeter-wave base station to measure, on a beam corresponding to particular beam index information (the second beam index information), the sounding reference signal of the terminal. The second beam index information in this embodiment of the present invention and the seventh beam index information in the embodiment corresponding to FIG. 9 have a same function.

After measuring the power of the sounding reference signal sent by the terminal, the millimeter-wave base station sends a measurement result of the sounding reference signal to the base station controller. Before the millimeter-wave base station communicates with the terminal, the base station controller determines, according to the power of the sounding reference signal sent by the terminal, whether to serve the terminal. Alternatively, in a process in which the millimeter-wave base station communicates with the terminal, the base station controller determines, according to the power of the sounding reference signal sent by the terminal, whether to continue to serve the terminal. For example, if the power of the sounding reference signal sent by the terminal is less than a threshold, it indicates that the terminal is unsuitable for communicating with the millimeter-wave base station any longer, and the base station controller may send a detection report to the master base station, to request the master base station to update a set of millimeter-wave base stations that serve the terminal. If the power of the sounding reference signal sent by the terminal is not less than the threshold, the detection report is not sent.

In conclusion, according to the method provided in this embodiment of the present invention, a master base station configures, for a terminal, beam index information corresponding to a millimeter-wave band, so that the terminal communicates, by using a beam corresponding to the beam index information, with a millimeter-wave base station corresponding to the millimeter-wave band, so as to resolve a problem in the prior art that available bandwidth is relatively small when a terminal performs cellular communication, extend a frequency range of terminal communication, increase a data transmission rate of the terminal, reducing signal fading and distortion during millimeter-wave communication between the terminal and a millimeter-wave base station, and reduce interference between users on a same channel.

Referring to FIG. 11, FIG. 11 shows a method flowchart of a millimeter-wave cellular communication method according to an embodiment of the present invention. A millimeter-wave base station corresponding to the millimeter-wave communication method may be the base station in the embodiment shown in FIG. 5. The base station in the embodiment shown in FIG. 5 may perform the following step of the method:

Step 1102: The millimeter-wave base station configures, for a terminal, beam index information corresponding to a millimeter-wave band, where the beam index information is used to instruct the terminal to communicate, by using a beam corresponding to the beam index information, with a millimeter-wave base station corresponding to the millimeter-wave band.

Specifically, the millimeter-wave base station may send a radio resource reconfiguration message or a broadcast message that includes the beam index information to the terminal; or

the millimeter-wave base station may negotiate with the terminal to determine the beam index information.

In addition, the millimeter-wave base station may further receive a measurement report sent by the terminal, where the measurement report is a measurement report that is sent by the terminal according to a measurement result of RRM measurement after the terminal performs the RRM measurement according to a beam corresponding to first beam index information included in the beam index information. The millimeter-wave base station sends the measurement report to a base station controller, where the measurement report is used to instruct the base station controller to determine the millimeter-wave base station for sending data to the terminal and beam index information used for sending data to the terminal.

The first beam index information in this embodiment of the present invention and the second beam index information in the foregoing embodiment corresponding to FIG. 9 have a same function.

In addition, the millimeter-wave base station may further send, to the terminal, sounding reference signal configuration information of a cell on the millimeter-wave band, where the sounding reference signal configuration information is used to instruct the terminal to send a sounding reference signal on the beam corresponding to the beam index information.

Optionally, the millimeter-wave base station receives a random access preamble that is sent by the terminal on a beam corresponding to second beam index information used as a physical random access channel resource.

Optionally, the millimeter-wave base station sends a random access response message on the beam corresponding to the second beam index information.

The random access response message includes third beam guide information.

Optionally, the millimeter-wave base station receives a random access message on a beam corresponding to the third beam index information, where the random access message includes an identifier of the terminal.

Optionally, the millimeter-wave base station sends a contention resolution message on the beam corresponding to the third beam index, where the contention resolution message includes the identifier of the terminal.

The identifier of the terminal is a cell radio network temporary identifier C-RNTI or a System Architecture Evolution-temporary mobile station identifier S-TMSI of the terminal.

The terminal may perform random access to the millimeter-wave base station according to the second beam index information in the beam index information. The random access may be a non-contention-based random access process, or may be a contention-based random access process. For a specific random access method, reference may be made to descriptions in the embodiment corresponding to FIG. 9, and details are not described herein again. The second beam index information in this embodiment of the present invention and the fifth beam index information in the foregoing embodiment corresponding to FIG. 9 have a same function. The third beam index information in this embodiment of the present invention and the sixth beam index information in the foregoing embodiment corresponding to FIG. 9 have a same function.

Optionally, the millimeter-wave base station receives uplink measurement configuration information sent by a master base station or the base station controller, where the uplink measurement configuration information includes fourth beam index information.

Optionally, the millimeter-wave base station measures, on a beam corresponding to the fourth beam index information, power of the sounding reference signal sent by the terminal.

Optionally, the millimeter-wave base station sends, to the base station controller, a measurement result that includes the power that is of the sounding reference signal and that is obtained by means of measurement, where the measurement result is used to instruct the base station controller to, when the power of the sounding reference signal is greater than a preset power threshold, instruct the millimeter-wave base station to prepare to communicate with the terminal.

The fourth beam index information in this embodiment of the present invention and the seventh beam index information in the foregoing embodiment corresponding to FIG. 9 have a same function.

The master base station or the base station controller may specify that specific millimeter-wave base stations measure power of sounding reference signals of specific terminals. Specifically, the master base station or the base station controller instructs the terminal to send the SRS on the beam corresponding to the beam index information, and instructs the millimeter-wave base station to measure, on a beam corresponding to particular beam index information (the fourth beam index information), the sounding reference signal of the terminal.

After measuring the power of the sounding reference signal sent by the terminal, the millimeter-wave base station sends the measurement result of the sounding reference signal to the base station controller. Before the millimeter-wave base station communicates with the terminal, the base station controller determines, according to the power of the sounding reference signal sent by the terminal, whether to serve the terminal. Alternatively, in a process in which the millimeter-wave base station communicates with the terminal, the base station controller determines, according to the power of the sounding reference signal sent by the terminal, whether to continue to serve the terminal. For example, if the power of the sounding reference signal sent by the terminal is less than a threshold, it indicates that the terminal is unsuitable for communicating with the millimeter-wave base station any longer, and the base station controller may send a detection report to the master base station, to request the master base station to update a set of millimeter-wave base stations that serve the terminal. If the power of the sounding reference signal sent by the terminal is not less than the threshold, the detection report is not sent.

In conclusion, according to the millimeter-wave cellular communication method provided in this embodiment of the present invention, a millimeter-wave base station communicates with a terminal by using a beam corresponding to beam index information corresponding to a millimeter-wave band, so as to resolve a problem in the prior art that available bandwidth is relatively small when a terminal performs cellular communication, extend a frequency range of terminal communication, increase a data transmission rate of the terminal, reduce signal fading and distortion during millimeter-wave communication between the terminal and a millimeter-wave base station, and reduce interference between users on a same channel.

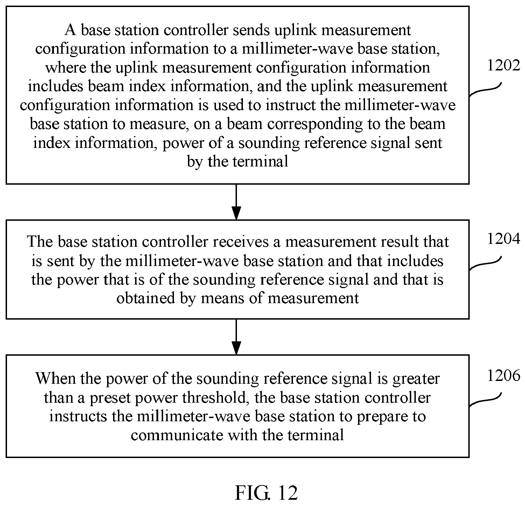

Referring to FIG. 12, FIG. 12 shows a method flowchart of a millimeter-wave cellular communication method according to an embodiment of the present invention. A base station controller corresponding to the millimeter-wave communication method may be the base station controller in the embodiment shown in FIG. 7. The base station controller in the embodiment shown in FIG. 7 may perform the following steps of the method.

Step 1202: The base station controller sends uplink measurement configuration information to a millimeter-wave base station, where the uplink measurement configuration information includes beam index information, and the uplink measurement configuration information is used to instruct the millimeter-wave base station to measure, on a beam corresponding to the beam index information, power of a sounding reference signal sent by the terminal.

Step 1204: The base station controller receives a measurement result that is sent by the millimeter-wave base station and that includes the power that is of the sounding reference signal and that is obtained by means of measurement.

Step 1206: When the power of the sounding reference signal is greater than a preset power threshold, the base station controller instructs the millimeter-wave base station to prepare to communicate with the terminal.

The terminal communicates, by using the beam index information corresponding to a millimeter-wave band, millimeter-wave base stations corresponding to the millimeter-wave band.

A master base station or the base station controller may specify that specific millimeter-wave base stations measure power of sounding reference signals of specific terminals. Specifically, the master base station or the base station controller instructs the terminal to send the SRS on the beam corresponding to the beam index information, and instructs the millimeter-wave base station to measure, on a beam corresponding to particular beam index information, the sounding reference signal of the terminal. The beam index information in this embodiment of the present invention and the seventh beam index information in the foregoing embodiment corresponding to FIG. 9 have a same function.

After measuring the power of the sounding reference signal sent by the terminal, the millimeter-wave base station sends the measurement result of the sounding reference signal to the base station controller. Before the millimeter-wave base station communicates with the terminal, the base station controller determines, according to the power of the sounding reference signal sent by the terminal, whether to serve the terminal. Alternatively, in a process in which the millimeter-wave base station communicates with the terminal, the base station controller determines, according to the power of the sounding reference signal sent by the terminal, whether to continue to serve the terminal. For example, if the power of the sounding reference signal sent by the terminal is less than a threshold, it indicates that the terminal is unsuitable for communicating with the millimeter-wave base station any longer, and the base station controller may send a detection report to the master base station, to request the master base station to update a set of millimeter-wave base stations that serve the terminal. If the power of the sounding reference signal sent by the terminal is not less than the threshold, the detection report is not sent.

In addition, the base station controller may further receive a measurement report sent by the millimeter-wave base station, where the measurement report is a measurement report that is sent by the terminal according to a measurement result of RRM measurement after the terminal performs the RRM measurement according to a beam corresponding to first beam index information included in the beam index information.

The base station controller determines, according to the measurement report, the millimeter-wave base station for sending data to the terminal and beam index information used for sending data to the terminal.

In conclusion, according to the millimeter-wave cellular communication method provided in this embodiment of the present invention, a base station controller instructs a millimeter-wave base station to measure, on a beam corresponding to particular beam index information, a sounding reference signal of the terminal, so that the terminal performs communication on a beam corresponding to the beam index information corresponding to a millimeter-wave band, so as to resolve a problem in the prior art that available bandwidth is relatively small when a terminal performs cellular communication, extend a frequency range of terminal communication, increasing a data transmission rate of the terminal, reduce signal fading and distortion during millimeter-wave communication between the terminal and a millimeter-wave base station, and reduce interference between users on a same channel.

A person of ordinary skill in the art may understand that all or some of the steps of the embodiments may be implemented by hardware or a program instructing related hardware. The program may be stored in a computer-readable storage medium. The storage medium may be: a read-only memory, a magnetic disk, or an optical disc.

The foregoing descriptions are merely examples of embodiments of the present invention, but are not intended to limit the present invention. Any modification, equivalent replacement, and improvement made without departing from the spirit and principle of the present invention shall fall within the protection scope of the present invention.

## Claims

1. A terminal, wherein the terminal comprises a bus, and a processor, a memory, a transmitter, and a receiver that are connected to the bus, wherein the memory is configured to store several instructions, and the several instructions are configured to be executed by the processor; and
the processor is configured to:

   control the receiver to obtain beam index information corresponding to a millimeter-wave band; and
   communicate, by using a beam corresponding to the beam index information, with a millimeter-wave base station corresponding to the millimeter-wave band.

2. The terminal according to claim 1, wherein:

   the processor is further configured to control the receiver to receive a radio resource reconfiguration message or a broadcast message sent by a master base station or the millimeter-wave base station, and to obtain the beam index information comprised in the radio resource reconfiguration message or the broadcast message; or
   the processor is further configured to negotiate with a master base station or the millimeter-wave base station to agree on the beam index information; wherein
   the master base station and the millimeter-wave base station are a same base station or different base stations.

3. The terminal according to claim 2, wherein:

   the processor is further configured to select beams corresponding to some or all beam index information in the beam index information, to communicate with the millimeter-wave base station; or
   the processor is further configured to: determine first beam index information that is in the beam index information and is specified by the master base station or the millimeter-wave base station, and communicate with the millimeter-wave base station according to a beam corresponding to the first beam index information.

4. The terminal according to any one of claims 1 to 3, wherein each piece of the beam index information is corresponding to information about one precoding codebook or information about one group of antenna weights, or each of the beam index is corresponding to information about multiple precoding codebooks or information about multiple groups of antenna weights, and each precoding codebook or information about each group of antenna weights uniquely determines a beam.

5. The terminal according to any one of claims 1 to 3, wherein each piece of the beam index information is corresponding to a coverage area of one sector or one cell, or each piece of the beam index information is corresponding to a part of a coverage area of one sector or one cell;

the beam index information is one-level index information or N-level index information, N is an integer, and N≥2; and

when the beam index information is the N-level index information, the $i^{th}$ level index information in the beam index information is associated with the $(i+1)^{th}$ level index information, wherein a coverage area of a beam corresponding to the $(i+1)^{th}$ level index information is not greater than a coverage area of a beam corresponding to the $i^{th}$ level index information, i is an integer, and 2≤i≤N.

6. The terminal according to claim 1 or 2, wherein the beam index information comprises second beam index information used for radio resource management RRM measurement; and
the processor is further configured to:

perform RRM measurement according to a beam corresponding to the second beam index information, to obtain a first measurement result, wherein the first measurement result comprises reference signal received power RSRP and/or reference signal received quality RSRQ; and control the transmitter to send a first measurement report to the master base station or the millimeter-wave base station according to the first measurement result, wherein the first measurement report comprises at least one of the following information: beam index information with highest RSRP and/or highest RSRQ, an RSRP measurement result and/or an RSRQ measurement result on a beam corresponding to the beam index information with highest RSRP and/or highest RSRQ, frequency information in which the beam index information with highest RSRP and/or highest RSRQ is located, serving cell information associated with the beam index information with highest RSRP and/or highest RSRQ, or neighboring cell information associated with the beam index information with highest RSRP and/or highest RSRQ; wherein the serving cell information or the neighboring cell information is indicated by using a physical cell identifier PCI and/or a cell global identification CGI.

7. The terminal according to claim 6, wherein the beam index information further comprises third beam index information used for candidate RRM measurement; and

the processor is further configured to: when the RSRP comprised in the first measurement result is less than a preconfigured threshold and/or when the RSRQ comprised in the first measurement result is less than a preconfigured threshold, perform RRM measurement according to a beam corresponding to the third beam index information.

8. The terminal according to claim 6, wherein the beam index information further comprises fourth beam index information used for intra-frequency measurement; and
the processor is further configured to:

control the receiver to obtain measurement gap period information associated with the fourth beam index information; and
perform, in a measurement gap indicated by the measurement gap period information, intra-frequency measurement on the millimeter-wave band according to a beam corresponding to the fourth beam index information.

9. The terminal according to claim 6, wherein:

the processor is further configured to communicate with the millimeter-wave base station on the beam corresponding to the beam index information with highest RSRP and/or highest RSRQ.

10. The terminal according to claim 1 or 2, wherein:

the processor is further configured to:

determine, from the beam index information, fifth beam index information used as a physical random access channel resource; and
perform random access according to a beam corresponding to the fifth beam index information.

11. The terminal according to claim 10, wherein:

the processor is further configured to select a piece of beam index information from the beam index information as the fifth beam index information; or
the processor is further configured to determine, as the fifth beam index information, beam index information that is in the beam index information and that is specified by the master base station or the millimeter-wave base station as the physical random access channel resource.

**12.** The terminal according to claim 10, wherein:

the processor is further configured to:

control the transmitter to send a random access preamble on the beam corresponding to the fifth beam index information; and control the receiver to receive a random access response message on the beam corresponding to the fifth beam index information, or to receive a random access response message on the beam corresponding to the beam index information.

**13.** The terminal according to claim 12, wherein the random access response message comprises sixth beam guide information; and the processor is further configured to:

control the transmitter to send a random access message on a beam corresponding to the sixth beam index information, wherein the random access message comprises an identifier of the terminal; and control the receiver to receive a contention resolution message on the beam corresponding to the sixth beam index, or to receive a contention resolution message on the beam corresponding to the beam index information, wherein the contention resolution message comprises the identifier of the terminal; and the identifier of the terminal is a cell radio network temporary identifier C-RNTI or a System Architecture Evolution-temporary mobile station identifier S-TMSI of the terminal.

**14.** The terminal according to claim 1, wherein:

the processor is further configured to:

control the receiver to receive sounding reference signal configuration information that is of a cell on the millimeter-wave band and is sent by the master base station or the millimeter-wave base station; and control the transmitter to send, according to the sounding reference signal configuration information, a sounding reference signal on the beam corresponding to the beam index information.

**15.** A terminal, wherein the terminal comprises:

a receiving module, configured to obtain beam index information corresponding to a millimeter-wave band; and a communications module, configured to communicate, by using a beam corresponding to the beam index information, with a millimeter-wave base station corresponding to the millimeter-wave band.

**16.** The terminal according to claim 15, wherein the receiving module is further configured to:

receive a radio resource reconfiguration message or a broadcast message sent by a master base station or the millimeter-wave base station; and obtain the beam index information comprised in the radio resource reconfiguration message or the broadcast message; and the communications module is further configured to negotiate with the master base station or the millimeter-wave base station to agree on the beam index information; wherein the master base station and the millimeter-wave base station are a same base station or different base stations.

**17.** The terminal according to claim 16, wherein:

the communications module is further configured to:

select beams corresponding to some or all beam index information in the beam index information, to communicate with the millimeter-wave base station; or determine first beam index information that is in the beam index information and is specified by the master base station or the millimeter-wave base station, and communicate with the millimeter-wave base station according to a beam corresponding to the first beam index information.

**18.** The terminal according to any one of claims 15 to 17, wherein each piece of the beam index information is corresponding to information about one precoding codebook or information about one group of antenna weights, or each of the beam index is corresponding to information about multiple precoding codebooks or information about multiple groups of antenna weights, and each precoding codebook or information about each group of antenna weights uniquely determines a beam.

**19.** The terminal according to any one of claims 15 to 17, wherein each piece of

the beam index information is corresponding to a coverage area of one sector or one cell, or each piece of the beam index information is corresponding to a part of a coverage area of one sector or one cell; the beam index information is one-level index information or N-level index information, N is an integer, and N≥2; and

when the beam index information is the N-level index information, the $i^{th}$ level index information in the beam index information is associated with the $(i+1)^{th}$ level index information, wherein a coverage area of a beam corresponding to the $(i+1)^{th}$ level index information is not greater than a coverage area of a beam corresponding to the $i^{th}$ level index information, i is an integer, and 2≤i≤N.

20. The terminal according to claim 15 or 16, wherein the beam index information comprises second beam index information used for radio resource management RRM measurement, and the terminal further comprises:

a measurement module, configured to perform RRM measurement according to a beam corresponding to the second beam index information, to obtain a first measurement result, wherein the first measurement result comprises reference signal received power RSRP and/or reference signal received quality RSRQ; and

a sending module, configured to send a first measurement report to the master base station or the millimeter-wave base station according to the first measurement result, wherein the first measurement report comprises at least one of the following information: beam index information with highest RSRP and/or highest RSRQ, an RSRP measurement result and/or an RSRQ measurement result on a beam corresponding to the beam index information with highest RSRP and/or highest RSRQ, frequency information in which the beam index information with highest RSRP and/or highest RSRQ is located, serving cell information associated with the beam index information with highest RSRP and/or highest RSRQ, or neighboring cell information associated with the beam index information with highest RSRP and/or highest RSRQ; wherein

the serving cell information or the neighboring cell information is indicated by using a physical cell identifier PCI and/or a cell global identification CGI.

21. The terminal according to claim 20, wherein the beam index information further comprises third beam index information used for candidate RRM measurement, and the measurement module is further configured to:

when the RSRP comprised in the first measurement result is less than a preconfigured threshold and/or when the RSRQ comprised in the first measurement result is less than a preconfigured threshold, start to perform RRM measurement according to a beam corresponding to the third beam index information.

22. The terminal according to claim 20, wherein the beam index information further comprises fourth beam index information used for intra-frequency measurement;

the receiving module is further configured to obtain measurement gap period information associated with the fourth beam index information; and

the measurement module is further configured to perform, in a measurement gap indicated by the measurement gap period information, intra-frequency measurement on the millimeter-wave band according to a beam corresponding to the fourth beam index information.

23. The terminal according to claim 20, wherein:

the communications module is further configured to communicate, by the terminal, with the millimeter-wave base station on the beam corresponding to the beam index information with highest RSRP and/or highest RSRQ.

24. The terminal according to claim 15 or 16, wherein the terminal further comprises:

a determining module, configured to determine, from the beam index information, fifth beam index information used as a physical random access channel resource; and

an access module, configured to perform random access according to a beam corresponding to the fifth beam index information.

25. The terminal according to claim 24, wherein the determining module is specifically configured to: select a piece of beam index information from the beam index information as the fifth beam index information; or

determine, as the fifth beam index information, beam index information that is in the beam index information and that is specified by the master base station or the millimeter-wave base station as the physical random access channel resource.

26. The terminal according to claim 24, wherein:

the sending module is further configured to send a random access preamble on the beam corresponding to the fifth beam index information; and the receiving module is further configured to:

receive a random access response message on the beam corresponding to the fifth beam index information; or
receive a random access response message on the beam corresponding to the beam index information.

27. The terminal according to claim 26, wherein the random access response message comprises sixth beam guide information;
the sending module is further configured to send a random access message on a beam corresponding to the sixth beam index information, wherein the random access message comprises an identifier of the terminal; and
the receiving module is further configured to:

receive a contention resolution message on the beam corresponding to the sixth beam index; or
receive a contention resolution message on the beam corresponding to the beam index information, wherein the contention resolution message comprises the identifier of the terminal; and
the identifier of the terminal is a cell radio network temporary identifier C-RNTI or a System Architecture Evolution-temporary mobile station identifier S-TMSI of the terminal.

28. The terminal according to claim 15, wherein:

the receiving module is further configured to receive sounding reference signal configuration information that is of a cell on the millimeter-wave band and is sent by the master base station or the millimeter-wave base station; and
the sending module is further configured to send, according to the sounding reference signal configuration information, a sounding reference signal on the beam corresponding to the beam index information.

29. A base station, wherein the base station comprises a bus, and a processor, a memory, a transmitter, and a receiver that are connected to the bus, wherein the memory is configured to store several instructions, and the several instructions are configured to be executed by the processor; and
the processor is configured to configure, for a terminal, beam index information corresponding to a millimeter-wave band, wherein the beam index information is used to instruct the terminal to communicate, by using a beam corresponding to the beam index information, with a millimeter-wave base station corresponding to the millimeter-wave band.

30. The base station according to claim 29, wherein the processor is further configured to control the transmitter to send a radio resource reconfiguration message or a broadcast message that comprises the beam index information to the terminal; or
the processor is further configured to negotiate with the terminal to determine the beam index information.

31. The base station according to claim 29 or 30, wherein:

the processor is further configured to:

control the receiver to receive a measurement report sent by the terminal, wherein the measurement report is a report that is sent by the terminal according to a measurement result of RRM measurement after the terminal performs the RRM measurement according to a beam corresponding to first beam index information comprised in the beam index information; and
determine, according to the measurement report, the millimeter-wave base station for sending data to the terminal and beam index information used for sending data to the terminal.

32. The base station according to claim 29 or 30, wherein:

the processor is further configured to control the transmitter to send, to the terminal, sounding reference signal configuration information of a cell on the millimeter-wave band, wherein the sounding reference signal configuration information is used to instruct the terminal to send a sounding reference signal on the beam corresponding to the beam index information.

33. The base station according to claim 29 or 30, wherein:

the processor is further configured to control the transmitter to send uplink measurement configuration information to the millimeter-wave base station, wherein the uplink measurement configuration information comprises second beam index information, and the uplink measurement configuration information is used to instruct the millimeter-wave base station to measure, on a beam corresponding to the second beam index information, power of a sounding reference signal sent by the terminal.

34. A base station, wherein the base station comprises:

a configuration module, configured to configure, for a terminal, beam index information corresponding to a millimeter-wave band, wherein the beam index information is used to instruct the terminal to communicate with the base station by using a beam corresponding to the beam index information.

35. The base station according to claim 34, further comprising:

a sending module, configured to send a radio resource reconfiguration message or a broadcast message that comprises the beam index information to the terminal; or
the base station further comprises a negotiation module, configured to negotiate with the terminal to determine the beam index information.

36. The base station according to claim 34 or 35, wherein the base station further comprises:

a receiving module, configured to receive a measurement report sent by the terminal, wherein the measurement report is a report that is sent by the terminal according to a measurement result of RRM measurement after the terminal performs the RRM measurement according to a beam corresponding to first beam index information comprised in the beam index information; and
a determining module, configured to determine, according to the measurement report, a millimeter-wave base station for sending data to the terminal and beam index information used for sending data to the terminal.

37. The base station according to claim 34 or 35, wherein:

the sending module is further configured to send, to the terminal, sounding reference signal configuration information of a cell on the millimeter-wave band, wherein the sounding reference signal configuration information is used to instruct the terminal to send a sounding reference signal on the beam corresponding to the beam index information.

38. The base station according to claim 34 or 35, wherein:

the sending module is further configured to send uplink measurement configuration information to the millimeter-wave base station, wherein the uplink measurement configuration information comprises second beam index information, and the uplink measurement configuration information is used to instruct the millimeter-wave base station to measure, on a beam corresponding to the second beam index information, power of a sounding reference signal sent by the terminal.

39. A base station, wherein the base station comprises a bus, and a processor, a memory, a transmitter, and a receiver that are connected to the bus, wherein the memory is configured to store several instructions, and the several instructions are configured to be executed by the processor; and
the processor is configured to configure, for a terminal, beam index information corresponding to a millimeter-wave band, wherein the beam index information is used to instruct the terminal to communicate with the base station by using a beam corresponding to the beam index information.

40. The base station according to claim 39, wherein:

the processor is further configured to control the transmitter to send a radio resource reconfiguration message or a broadcast message that comprises the beam index information to the terminal; or
the processor is further configured to negotiate with the terminal to determine the beam index information.

41. The base station according to claim 39 or 40, wherein:

the processor is further configured to:

control the receiver to receive a measurement report sent by the terminal, wherein the measurement report is a measurement report that is sent by the terminal according to a measurement result of RRM measurement after the terminal performs the RRM measurement according to a beam corresponding to first beam index information comprised in the beam index information; and
control the transmitter to send the measurement report to a base station controller, wherein the measurement report is used to instruct the base station controller to determine a millimeter-wave base station for sending data to the terminal and beam index information used for sending data to the terminal.

42. The base station according to claim 39 or 40, wherein:

the processor is further configured to control the transmitter to send, to the terminal, sounding reference signal configuration information of a cell on the millimeter-wave band, wherein the sounding reference signal configuration information is used to instruct the terminal to send a sounding reference signal on the beam corresponding to the beam index information.

43. The base station according to claim 39, wherein:

the processor is further configured to:

control the receiver to receive a random access preamble that is sent by the terminal on a beam corresponding to second beam index information used as a physical random access channel resource; and
control the transmitter to send a random access response message on the beam corresponding to the second beam index information.

44. The base station according to claim 43, wherein the random access response message comprises third beam guide information; and
the processor is further configured to:

control the receiver to receive a random access message on a beam corresponding to the third beam index information, wherein the random access message comprises an identifier of the terminal; and
control the transmitter to send a contention resolution message on the beam corresponding to the third beam index, wherein the contention resolution message comprises the identifier of the terminal; and
the identifier of the terminal is a cell radio network temporary identifier C-RNTI or a System Architecture Evolution-temporary mobile station identifier S-TMSI of the terminal.

45. The base station according to any one of claims 39 to 44, wherein:

the processor is further configured to:

control the receiver to receive uplink measurement configuration information sent by a master base station or the base station controller, wherein the uplink measurement configuration information comprises fourth beam index information;
measure, on a beam corresponding to the fourth beam index information, power of the sounding reference signal sent by the terminal; and
control the transmitter to send, to the base station controller, a measurement result that comprises the power that is of the sounding reference signal and that is obtained by means of measurement, wherein the measurement result is used to instruct the base station controller to, when the power of the sounding reference signal is greater than a preset power threshold, instruct the millimeter-wave base station to prepare to communicate with the terminal.

46. A base station, wherein the base station comprises:

a configuration module, configured to configure, for a terminal, beam index information corresponding to a millimeter-wave band, wherein the beam index information is used to instruct the terminal to communicate, by using a beam corresponding to the beam index information, with a millimeter-wave base station corresponding to the millimeter-wave band.

47. The base station according to claim 46, further comprising a sending module, configured to send a radio resource reconfiguration message or a broadcast message that comprises the beam index information to the terminal; or
the base station further comprises a negotiation module, configured to negotiate with the terminal to determine the beam index information.

48. The base station according to claim 46 or 47, wherein:

the base station further comprises:

a receiving module, configured to receive a measurement report sent by the terminal, wherein the measurement report is a measurement report that is sent by the terminal according to a measurement result of RRM measurement after the terminal performs the RRM measurement according to a beam corresponding to first beam index information comprised in the beam index information; wherein
the sending module is further configured to send the measurement report to a base station controller, wherein the measurement report is used to instruct the base station controller to determine the millimeter-wave base station for sending data to the terminal and beam index information used for sending data to the terminal.

49. The base station according to claim 46 or 47, wherein:

the sending module is further configured to send, to the terminal, sounding reference signal configuration information of a cell on the millimeter-wave band, wherein the sounding reference signal configuration information is used to instruct the terminal to send a sounding reference signal on the beam corresponding to the beam index information.

50. The base station according to claim 46, wherein:

the receiving module is further configured to receive a random access preamble that is sent by the terminal on a beam corresponding to second beam index information used as a physical random access channel resource; and
the sending module is further configured to send a random access response message on the beam corresponding to the second beam index information.

51. The base station according to claim 50, wherein the random access response message comprises third beam guide information;
the receiving module is further configured to receive a random access message on a beam corresponding to the third beam index information, wherein the random access message comprises an identifier of the terminal; and
the sending module is further configured to send a contention resolution message on the beam corresponding to the third beam index, wherein the contention resolution message comprises the identifier of the terminal; and
the identifier of the terminal is a cell radio network temporary identifier C-RNTI or a System Architecture Evolution-temporary mobile station identifier S-TMSI of the terminal.

52. The base station according to any one of claims 46 to 51, wherein:

the receiving module is further configured to receive uplink measurement configuration information sent by a master base station or the base station controller, wherein the uplink measurement configuration information comprises fourth beam index information;
the base station further comprises a measurement module, configured to measure, on a beam corresponding to the fourth beam index information, power of the sounding reference signal sent by the terminal; and
the sending module is further configured to send a measurement result that comprises the power that is of the sounding reference signal and that is obtained by means of measurement, wherein the measurement result is used to instruct the base station controller to, when the power of the sounding reference signal is greater than a preset power threshold, instruct the millimeter-wave base station to prepare to communicate with the terminal.

53. A base station controller, wherein the base station controller comprises a bus, and a processor, a memory, a transmitter, and a receiver that are connected to the bus, wherein the memory is configured to store several instructions, and the several instructions are configured to be executed by the processor; and the processor is configured to:

control the transmitter to send uplink measurement configuration information to a millimeter-wave base station, wherein the uplink measurement configuration information comprises beam index information, and the uplink measurement configuration information is used to instruct the millimeter-wave base station to measure, on a beam corresponding to the beam index information, power of a sounding reference signal sent by the terminal;
control the receiver to receive a measurement result that is sent by the millimeter-wave base station and that comprises the power that is of the sounding reference signal and that is obtained by means of measurement; and
when the power of the sounding reference signal is greater than a preset power threshold, instruct the millimeter-wave base station to prepare to communicate with the terminal; wherein
the terminal communicates, by using the beam index information corresponding to a millimeter-wave band, millimeter-wave base stations corresponding to the millimeter-wave band.

54. The base station controller according to claim 53, wherein:

the processor is further configured to:

control the receiver to receive a measurement report sent by the millimeter-wave base station, wherein the measurement report is a measurement report that is sent by the terminal according to a measurement result of RRM measurement after the terminal performs the RRM measurement according to a beam corresponding to first beam index information comprised in the beam index information; and
determine, according to the measurement report, the millimeter-wave base station for sending data to the terminal and beam index information used for sending data to the terminal.

55. A base station controller, wherein the base station controller comprises:

a sending module, configured to send uplink measurement configuration information to a millimeter-wave base station, wherein the uplink measurement configuration information comprises beam index information, and the uplink measurement configuration information is used to instruct the millimeter-wave base station to measure, on a beam corresponding to the beam index information, power of a sounding reference signal sent by the terminal;

a receiving module, configured to receive a measurement result that is sent by the millimeter-wave base station and that comprises the power that is of the sounding reference signal and that is obtained by means of measurement; and

an instruction module, configured to: when the power of the sounding reference signal is greater than a preset power threshold, instruct the millimeter-wave base station to prepare to communicate with the terminal; wherein

the terminal communicates, by using the beam index information corresponding to a millimeter-wave band, millimeter-wave base stations corresponding to the millimeter-wave band.

56. The base station controller according to claim 55, wherein:

the receiving module is further configured to receive a measurement report sent by the millimeter-wave base station, wherein the measurement report is a measurement report that is sent by the terminal according to a measurement result of RRM measurement after the terminal performs the RRM measurement according to a beam corresponding to first beam index information comprised in the beam index information; and

the base station controller further comprises a determining module, configured to determine, according to the measurement report, the millimeter-wave base station for sending data to the terminal and beam index information used for sending data to the terminal.

57. A millimeter-wave cellular communication method, wherein the method comprises:

obtaining, by a terminal, beam index information corresponding to a millimeter-wave band; and

communicating, by the terminal by using a beam corresponding to the beam index information, with a millimeter-wave base station corresponding to the millimeter-wave band.

58. The method according to claim 57, wherein the obtaining, by a terminal, beam index information corresponding to a millimeter-wave band comprises:

receiving a radio resource reconfiguration message or a broadcast message sent by a master base station or the millimeter-wave base station, and obtaining the beam index information comprised in the radio resource reconfiguration message or the broadcast message; or

negotiating with a master base station or the millimeter-wave base station to agree on the beam index information; wherein

the master base station and the millimeter-wave base station are a same base station or different base stations.

59. The method according to claim 58, wherein the communicating, by the terminal by using a beam corresponding to the beam index information, with a millimeter-wave base station corresponding to the millimeter-wave band comprises:

selecting beams corresponding to some or all beam index information in the beam index information, to communicate with the millimeter-wave base station; or

determining first beam index information that is in the beam index information and is specified by the master base station or the millimeter-wave base station, and communicating with the millimeter-wave base station according to a beam corresponding to the first beam index information.

60. The method according to any one of claims 57 to 59, wherein each piece of the beam index information is corresponding to information about one precoding codebook or information about one group of antenna weights, or each of the beam index is corresponding to information about multiple precoding codebooks or information about multiple groups of antenna weights, and each precoding codebook or information about each group of antenna weights uniquely determines a beam.

61. The method according to any one of claims 57 to 59, wherein each piece of the beam index information is corresponding to a coverage area of one sector or one cell, or each piece of the beam index information is corresponding to a part of a coverage area of one sector or one cell; the beam index information is one-level index information or N-level index information, N is an integer, and N≥2; and

when the beam index information is the N-level index information, the $i^{th}$ level index information in the beam index information is associated with the $(i+1)^{th}$ level index information, wherein a coverage area of a beam corresponding to the (i+1)$^{th}$ level index information is not greater than a coverage area of a beam corresponding to the i$^{th}$ level index information, i is an integer, and 2≤i≤N.

62. The method according to claim 57 or 58, wherein the beam index information comprises second beam index information used for radio resource management RRM measurement, and the method further comprises:

performing, by the terminal, RRM measurement according to a beam corresponding to the second beam index information, to obtain a first measurement result, wherein the first measurement result comprises reference signal received power RSRP and/or reference signal received quality RSRQ; and
sending, by the terminal, a first measurement report to the master base station or the millimeter-wave base station according to the first measurement result, wherein the first measurement report comprises at least one of the following information: beam index information with highest RSRP and/or highest RSRQ, an RSRP measurement result and/or an RSRQ measurement result on a beam corresponding to the beam index information with highest RSRP and/or highest RSRQ, frequency information in which the beam index information with highest RSRP and/or highest RSRQ is located, serving cell information associated with the beam index information with highest RSRP and/or highest RSRQ, or neighboring cell information associated with the beam index information with highest RSRP and/or highest RSRQ; wherein the serving cell information or the neighboring cell information is indicated by using a physical cell identifier PCI and/or a cell global identification CGI.

63. The method according to claim 62, wherein the beam index information further comprises third beam index information used for candidate RRM measurement, and the method further comprises:

when the RSRP comprised in the first measurement result is less than a preconfigured threshold and/or when the RSRQ comprised in the first measurement result is less than a preconfigured threshold, starting, by the terminal, to perform RRM measurement according to a beam corresponding to the third beam index information.

64. The method according to claim 62, wherein the beam index information further comprises fourth beam index information used for intra-frequency measurement, and the method further comprises:

obtaining, by the terminal, measurement gap period information associated with the fourth beam index information; and
performing, by the terminal in a measurement gap indicated by the measurement gap period information, intra-frequency measurement on the millimeter-wave band according to a beam corresponding to the fourth beam index information.

65. The method according to claim 62, wherein the communicating, by the terminal by using a beam corresponding to the beam index information, with a millimeter-wave base station corresponding to the millimeter-wave band comprises:

communicating, by the terminal, with the millimeter-wave base station on the beam corresponding to the beam index information with highest RSRP and/or highest RSRQ.

66. The method according to claim 57 or 58, wherein the method further comprises:

determining, by the terminal from the beam index information, fifth beam index information used as a physical random access channel resource; and
performing, by the terminal, random access according to a beam corresponding to the fifth beam index information.

67. The method according to claim 66, wherein the determining, by the terminal from the beam index information, fifth beam index information used as a physical random access channel resource comprises:

selecting a piece of beam index information from the beam index information as the fifth beam index information; or
determining, as the fifth beam index information, beam index information that is in the beam index information and that is specified by the master base station or the millimeter-wave base station as the physical random access channel resource.

68. The method according to claim 66, wherein the performing, by the terminal, random access according to a beam corresponding to the fifth beam index information comprises:

sending a random access preamble on the beam corresponding to the fifth beam index information; and
receiving a random access response message on the beam corresponding to the fifth beam index information, or receiving a random access response message on the beam corresponding to the beam index information.

**69.** The method according to claim 68, wherein the random access response message comprises sixth beam guide information, and the method further comprises:

sending, by the terminal, a random access message on a beam corresponding to the sixth beam index information, wherein the random access message comprises an identifier of the terminal; and
receiving, by the terminal, a contention resolution message on a beam corresponding to the sixth beam index; or receiving, by the terminal, a contention resolution message on the beam corresponding to the beam index information, wherein the contention resolution message comprises the identifier of the terminal; and
the identifier of the terminal is a cell radio network temporary identifier C-RNTI or a System Architecture Evolution-temporary mobile station identifier S-TMSI of the terminal.

**70.** The method according to claim 57, wherein the method further comprises:

receiving, by the terminal, sounding reference signal configuration information that is of a cell on the millimeter-wave band and is sent by the master base station or the millimeter-wave base station; and
sending, by the terminal according to the sounding reference signal configuration information, a sounding reference signal on the beam corresponding to the beam index information.

**71.** A millimeter-wave cellular communication method, wherein the method comprises:

configuring, by a master base station for a terminal, beam index information corresponding to a millimeter-wave band, wherein the beam index information is used to instruct the terminal to communicate, by using a beam corresponding to the beam index information, with a millimeter-wave base station corresponding to the millimeter-wave band.

**72.** The method according to claim 71, wherein the configuring, by a master base station for a terminal, beam index information corresponding to a millimeter-wave band comprises:

sending a radio resource reconfiguration message or a broadcast message that comprises the beam index information to the terminal; or negotiating with the terminal to determine the beam index information.

**73.** The method according to claim 71 or 72, wherein the method further comprises:

receiving, by the master base station, a measurement report sent by the terminal, wherein the measurement report is a measurement report that is sent by the terminal according to a measurement result of RRM measurement after the terminal performs the RRM measurement according to a beam corresponding to first beam index information comprised in the beam index information; and
determining, by the master base station according to the measurement report, the millimeter-wave base station for sending data to the terminal and beam index information used for sending data to the terminal.

**74.** The method according to claim 71 or 72, wherein the method further comprises:

sending, by the master base station to the terminal, sounding reference signal configuration information of a cell on the millimeter-wave band, wherein the sounding reference signal configuration information is used to instruct the terminal to send a sounding reference signal on the beam corresponding to the beam index information.

**75.** The method according to claim 71 or 72, wherein the method further comprises:

sending, by the master base station, uplink measurement configuration information to the millimeter-wave base station, wherein the uplink measurement configuration information comprises second beam index information, and the uplink measurement configuration information is used to instruct the millimeter-wave base station to measure, on a beam corresponding to the second beam index information, power of a sounding reference signal sent by the terminal.

**76.** A millimeter-wave cellular communication method, wherein the method comprises:

configuring, by a millimeter-wave base station for a terminal, beam index information corresponding to a millimeter-wave band, wherein the beam index information is used to instruct the terminal to communicate, by using a beam corresponding to the beam index information, with a millimeter-wave base station corresponding to the millimeter-wave band.

77. The method according to claim 76, wherein the configuring, by a millimeter-wave base station for a terminal, beam index information corresponding to a millimeter-wave band comprises:

> sending a radio resource reconfiguration message or a broadcast message that comprises the beam index information to the terminal; or negotiating with the terminal to determine the beam index information.

78. The method according to claim 76 or 77, wherein the method further comprises:

> receiving, by the millimeter-wave base station, a measurement report sent by the terminal, wherein the measurement report is a measurement report that is sent by the terminal according to a measurement result of RRM measurement after the terminal performs the RRM measurement according to a beam corresponding to first beam index information comprised in the beam index information; and
> sending, by the millimeter-wave base station, the measurement report to a base station controller, wherein the measurement report is used to instruct the base station controller to determine the millimeter-wave base station for sending data to the terminal and beam index information used for sending data to the terminal.

79. The method according to claim 76 or 77, wherein the method further comprises:

> sending, by the millimeter-wave base station to the terminal, sounding reference signal configuration information of a cell on the millimeter-wave band, wherein the sounding reference signal configuration information is used to instruct the terminal to send a sounding reference signal on the beam corresponding to the beam index information.

80. The method according to claim 76, wherein the method further comprises:

> receiving, by the millimeter-wave base station, a random access preamble that is sent by the terminal on a beam corresponding to second beam index information used as a physical random access channel resource; and
> sending, by the millimeter-wave base station, a random access response message on the beam corresponding to the second beam index information.

81. The method according to claim 80, wherein the random access response message comprises third beam guide information, and the method further comprises:

> receiving, by the millimeter-wave base station, a random access message on a beam corresponding to the third beam index information, wherein the random access message comprises an identifier of the terminal; and
> sending, by the millimeter-wave base station, a contention resolution message on the beam corresponding to the third beam index, wherein the contention resolution message comprises the identifier of the terminal; and
> the identifier of the terminal is a cell radio network temporary identifier C-RNTI or a System Architecture Evolution-temporary mobile station identifier S-TMSI of the terminal.

82. The method according to any one of claims 76 to 81, wherein the method further comprises:

> receiving, by the millimeter-wave base station, uplink measurement configuration information sent by a master base station or the base station controller, wherein the uplink measurement configuration information comprises fourth beam index information;
> measuring, by the millimeter-wave base station on a beam corresponding to the fourth beam index information, power of the sounding reference signal sent by the terminal; and
> sending, by the millimeter-wave base station to the base station controller, a measurement result that comprises the power that is of the sounding reference signal and that is obtained by means of measurement, wherein the measurement result is used to instruct the base station controller to, when the power of the sounding reference signal is greater than a preset power threshold, instruct the millimeter-wave base station to prepare to communicate with the terminal.

83. A millimeter-wave cellular communication method, wherein the method comprises:

> sending, by a base station controller, uplink measurement configuration information to a millimeter-wave base station, wherein the uplink measurement configuration information comprises beam index information, and the uplink measurement configuration information is used to instruct the millimeter-wave base station to measure, on a beam corresponding to the beam index information, power of a sounding reference signal sent by the terminal;

receiving, by the base station controller, a measurement result that is sent by the millimeter-wave base station and that comprises the power that is of the sounding reference signal and that is obtained by means of measurement; and when the power of the sounding reference signal is greater than a preset power threshold, instructing, by the base station controller, the millimeter-wave base station to prepare to communicate with the terminal; wherein

the terminal communicates, by using the beam index information corresponding to a millimeter-wave band, millimeter-wave base stations corresponding to the millimeter-wave band.

84. The method according to claim 83, wherein the method further comprises:

receiving, by the base station controller, a measurement report sent by the millimeter-wave base station, wherein the measurement report is a measurement report that is sent by the terminal according to a measurement result of RRM measurement after the terminal performs the RRM measurement according to a beam corresponding to first beam index information comprised in the beam index information; and determining, by the base station controller according to the measurement report, the millimeter-wave base station for sending data to the terminal and beam index information used for sending data to the terminal.

FIG. 1

FIG. 2

FIG. 3

FIG. 4

FIG. 5

FIG. 6

**FIG. 7**

**FIG. 8**

A terminal obtains beam index information corresponding to a millimeter-wave band | 902

The terminal communicates, according to the beam index information, with a millimeter-wave base station corresponding to the millimeter-wave band | 904

FIG. 9

A master base station configures, for a terminal, beam index information corresponding to a millimeter-wave band, where the beam index information is used to instruct the terminal to communicate, by using a beam corresponding to the beam index information, with a millimeter-wave base station corresponding to the millimeter-wave band | 1002

FIG. 10

A millimeter-wave base station configures, for a terminal, beam index information corresponding to a millimeter-wave band, where the beam index information is used to instruct the terminal to communicate, by using a beam corresponding to the beam index information, with a millimeter-wave base station corresponding to the millimeter-wave band | 1102

FIG. 11

A base station controller sends uplink measurement configuration information to a millimeter-wave base station, where the uplink measurement configuration information includes beam index information, and the uplink measurement configuration information is used to instruct the millimeter-wave base station to measure, on a beam corresponding to the beam index information, power of a sounding reference signal sent by the terminal — 1202

The base station controller receives a measurement result that is sent by the millimeter-wave base station and that includes the power that is of the sounding reference signal and that is obtained by means of measurement — 1204

When the power of the sounding reference signal is greater than a preset power threshold, the base station controller instructs the millimeter-wave base station to prepare to communicate with the terminal — 1206

FIG. 12

<table>
<tr><td colspan="2" align="center">**INTERNATIONAL SEARCH REPORT**</td><td>International application No.<br><br>PCT/CN2014/087171</td></tr>
</table>

**A. CLASSIFICATION OF SUBJECT MATTER**

H04W 48/16 (2009.01) i; H04W 76/02 (2009.01) i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT, CNABS, CNKI, VEN: Zhangjian, Zengqinghai, Liangyongming, index, radio resource reconfigurat+, broadcast+, message, radio resource management, rrm, mmw, millimeter wave, communicat+, bs, base station, mb, beam, wave

**C. DOCUMENTS CONSIDERED TO BE RELEVANT**

| Category* | Citation of document, with indication, where appropriate, of the relevant passages | Relevant to claim No. |
|---|---|---|
| X | CN 103988551 A (INTERDIGITAL PATENT HOLDINGS INC.) 13 August 2014 (13.08.2014) description, paragraphs [0045] to [0077], and figures 2 to 4B | 1, 2, 15, 29, 30, 46, 47, 57, 58, 71, 72 |
| A | CN 103988546 A (INTERDIGITAL PATENT HOLDINGS INC.) 13 August 2014 (13.08.2014) the whole document | 1-84 |
| A | CN 102326339 A (SONY CORP.) 18 January 2012 (18.01.2012) the whole document | 1-84 |
| A | WO 2013170169 A2 (INTERDIGITAL PATENT HOLDINGS INC.) 14 November 2013 (14.11.2013) the whole document | 1-84 |

☐ Further documents are listed in the continuation of Box C.  ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 19 May 2015 | 29 June 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Rongjuan<br><br>Telephone No. (86-10) 62411350 |

Form PCT/ISA/210 (second sheet) (July 2009)

INTERNATIONAL SEARCH REPORT
Information on patent family members

| | | International application No. |
|---|---|---|
| | | PCT/CN2014/087171 |

| Patent Documents referred in the Report | Publication Date | Patent Family | Publication Date |
|---|---|---|---|
| CN 103988551 A | 13 August 2014 | US 2015004918 A1 | 01 January 2015 |
| | | WO 2013086164 A1 | 13 June 2013 |
| | | EP 2789192 A1 | 15 October 2014 |
| | | JP 2015500602 A | 05 January 2015 |
| | | TW 201338479 A | 16 September 2013 |
| | | KR 20140102278 A | 21 August 2014 |
| CN 103988546 A | 13 August 2014 | WO 2013086410 A2 | 13 June 2013 |
| | | WO 2013086410 A3 | 29 August 2013 |
| | | JP 2015500605 A | 05 January 2015 |
| | | US 2014321282 A1 | 30 October 2014 |
| | | EP 2789187 A2 | 15 October 2014 |
| | | TW 201338439 A | 16 September 2013 |
| | | KR 20140116090 A | 01 October 2014 |
| CN 102326339 A | 18 January 2012 | CN 102326339 B | 17 December 2014 |
| | | EP 2403158 A1 | 04 January 2012 |
| | | US 2012122392 A1 | 17 May 2012 |
| | | JP 2010200030 A | 09 September 2010 |
| | | WO 2010098147 A1 | 02 September 2010 |
| | | EP 2403158 A4 | 26 November 2014 |
| | | JP 5278035 B2 | 04 September 2013 |
| WO 2013170169 A2 | 14 November 2013 | WO 2013170169 A8 | 06 March 2014 |
| | | EP 2848083 A2 | 18 March 2015 |
| | | TW 201408013 A | 16 February 2014 |
| | | WO 2013170169 A3 | 27 December 2013 |

Form PCT/ISA /210 (patent family annex) (July 2009)